# EUROPEAN PATENT SPECIFICATION

(11) **EP 2 202 369 B1**
(45) Date of publication and mention of the grant of the patent: **25.11.2015**
(21) Application number: 08840872.9
(22) Date of filing: 22.10.2008
(51) Int. Cl.: E05B 17/18, B62H 5/06

(54) **PROTECTOR OF CYLINDER LOCK**
ZYLINDERSCHLOSSSCHUTZ
PROTECTION DE SERRURE À BARILLET

(30) Priority: 25.10.2007 JP 2007278089; 22.11.2007 JP 2007303012; 10.09.2008 JP 2008232209
(43) Date of publication of application: 30.06.2010
(73) Proprietor: Kabushiki Kaisha Honda Lock, Miyazaki-shi, Miyazaki 880-0293 (JP)
(72) Inventor: KUROIWA, Takenobu, Miyazaki-shi Miyazaki 880-0293 (JP); ANDO, Takafumi, Miyazaki-shi Miyazaki 880-0293 (JP); INOUE, Shiro, Miyazaki-shi Miyazaki 880-0293 (JP); NIWAT, Samrerng, Chonburi 20000 (TH)
(74) Representative: Iannone, Carlo Luigi
(86) International application number: PCT/JP2008/069102
(87) International publication number: WO 2009/054395

(56) References cited:
- WO-A1-03/025316
- JP-A- 2002 322 837
- JP-A- 2003 035 055
- JP-A- 2003 056 219
- JP-A- 2003 239 581
- JP-A- 2005 076 204
- JP-A- 2005 089 993
- JP-A- 2005 336 885

## Description

### TECHNICAL FIELD

The present invention relates to a cylinder lock protection system that includes a casing fixed to a cylinder body of a cylinder lock and having an insertion hole corresponding to a key hole provided in an inner cylinder of the cylinder lock, a shutter plate housed within the casing so as to be capable of moving along a plane perpendicular to the axis of the key hole between a closed position at which the insertion hole is closed and an open position at which the insertion hole is opened, and a magnet lock that is capable of retaining the shutter plate at the closed position when locked and is capable of operating the shutter plate from the closed position to the open position when unlocked, the shutter plate being automatically returned from the open position to the closed position in response to a mechanical key being withdrawn from the key hole.

### BACKGROUND ART

A cylinder lock protection system in which, after a shutter plate for closing a key hole is moved to an open position in response to a magnet lock being unlocked, the shutter plate automatically returns to a closed position in response to a mechanical key inserted into the key hole being withdrawn, thus enhancing the operability and ensuring that closing the shutter plate is not forgotten, is already known from Patent Publication 1, for example.
Patent Publication 1: Japanese Patent Application Laid-open No. 2005-076204

### DISCLOSURE OF INVENTION

### PROBLEMS TO BE SOLVED BY THE INVENTION

However, in the arrangement disclosed by the above-described Patent Publication 1, since a member for retaining the shutter plate at the open position has a structure in which it moves in a direction along the axis of the key hole, the size of the casing in the direction along the axis of the key hole increases, and this results in the necessity for forming a long mechanical key.

The present invention has been accomplished in the light of the above-mentioned circumstances, and it is an object thereof to provide a cylinder lock protection system in which a shutter plate is automatically returned from an open position to a closed position in response to a mechanical key being withdrawn from a key hole, the cylinder lock protection system being formed compactly without the necessity for forming a long mechanical key.

### MEANS FOR SOLVING THE PROBLEMS

In order to attain the above object, according to a first aspect of the present invention, there is provided a cylinder lock protection system comprising: a casing fixed to a cylinder body of a cylinder lock and having an insertion hole corresponding to a key hole provided in an inner cylinder of the cylinder lock, a shutter plate housed within the casing so as to be capable of moving along a plane perpendicular to the axis of the key hole between a closed position at which the insertion hole is closed and an open position at which the insertion hole is opened, and a magnet lock that is capable of retaining the shutter plate at the closed position when locked and is capable of operating the shutter plate from the closed position to the open position when unlocked, the shutter plate being automatically returned from the open position to the closed position in response to a mechanical key being withdrawn from the key hole, characterized in that resilient means provided between the casing and the shutter plate so as to urge the shutter plate toward the closed position side, first and second engagement members capable of engaging with the shutter plate at the open position and retaining the shutter plate at the open position, and cam means for moving the first and second engagement members in response to movement of the shutter plate, insertion of the mechanical key into the key hole and removal therefrom, and pivoting of the mechanical key are housed within the casing so as to be capable of moving along a plane perpendicular to the axis of the key hole, the cam means making the first engagement member engage with the shutter plate from the closed position side in response to movement of the shutter plate from the closed position to the open position, making the second engagement member engage with the shutter plate from the closed position side in response to insertion of the mechanical key into the key hole, releasing the engagement of the first engagement member with the shutter plate in response to pivoting to the ON position by the mechanical key inserted into the key hole, and releasing the engagement of the second engagement member with the shutter plate in response to the mechanical key being withdrawn from the key hole.

According to a second aspect of the present invention, there is provided a cylinder lock protection system comprising: a casing fixed to a cylinder body of a cylinder lock and having an insertion hole corresponding to a key hole provided in an inner cylinder of the cylinder lock, a shutter plate housed within the casing so as to be capable of moving along a plane perpendicular to the axis of the key hole between a closed position at which the insertion hole is closed and an open position at which the insertion hole is opened, and a magnet lock that is capable of retaining the shutter plate at the closed position when locked and is capable of operating the shutter plate from the closed position to the open position when unlocked, the shutter plate being automatically returned from the open position to the closed position in response to a mechanical key being withdrawn from the key hole, characterized in that resilient means provided between the casing and the shutter plate or a coupling member that moves in association with the shutter plate, and urging the shutter plate toward the closed position side, first and second engagement members capable of engaging with the shutter plate or the coupling member when the shutter plate is at the open position and retaining the shutter plate at the open position, and cam means for moving the first and second engagement members in response to movement of the shutter plate, insertion of the mechanical key into the key hole and removal therefrom, and pivoting of the mechanical key are housed within the casing so as to be capable of moving along a plane perpendicular to the axis of the key hole, the cam means making the first engagement member engage with the shutter plate or the coupling member from the closed position side in response to movement of the shutter plate from the closed position to the open position, making the second engagement member engage with the shutter plate or the coupling member from the closed position side in response to insertion of the mechanical key into the key hole, releasing the engagement of the first engagement member with the shutter plate or the coupling member in response to pivoting to the ON position by the mechanical key inserted into the key hole, and even if the mechanical key is withdrawn from the key hole at the OFF position, engagement of the second engagement member with the shutter plate or the coupling member being maintained, but engagement of the second engagement member with the shutter plate or the coupling member being released in response to the mechanical key being withdrawn at the locked position from the key hole.

According to a third aspect of the present invention, in addition to the second aspect, the coupling member, which slides along a plane perpendicular to the axis of the key hole in response to movement of the shutter plate, abuts against and engages with the shutter plate from the open position side so that the shutter plate is urged toward the closed position side by the resilient urging force of the resilient means provided between the coupling member and the casing, and first and second latching parts for engaging with the first and second engagement members and retaining the shutter plate at the open position are provided on the coupling member.

According to a fourth aspect of the present invention, there is provided a cylinder lock protection system comprising: a casing fixed to a cylinder body of a cylinder lock and having an insertion hole corresponding to a key hole provided in an inner cylinder of the cylinder lock, a shutter plate housed within the casing so as to be capable of moving along a plane perpendicular to the axis of the key hole between a closed position at which the insertion hole is closed and an open position at which the insertion hole is opened, and a magnet lock that is capable of retaining the shutter plate at the closed position when locked and is capable of operating the shutter plate from the closed position to the open position when unlocked, the shutter plate being automatically returned from the open position to the closed position in response to a mechanical key being withdrawn from the key hole, wherein resilient means provided between the casing and the shutter plate so as to urge the shutter plate toward the closed position side, and shutter plate retaining means having first and second engagement members capable of engaging with the shutter plate at the open position and retaining the shutter plate at the open position are housed within the casing so as to be capable of moving along a plane perpendicular to the axis of the key hole, the shutter plate retaining means being arranged so as to retain the shutter plate at the open position by engaging the first engagement member with the shutter plate when the mechanical key is not inserted into the key hole while the shutter plate is at the open position, retain the shutter plate at the open position and release the engagement of the first engagement member with the shutter plate by engaging the second engagement member with the shutter plate in response to insertion of the mechanical key into the key hole, and release the engagement of the second engagement member with the shutter plate in response to withdrawal of the mechanical key from the key hole.

It should be noted here that a return spring 57 of the first embodiment, a return spring 106 of the second embodiment, and a return spring 147 of the third embodiment correspond to resilient means of the present invention.

### EFFECTS OF THE INVENTION

In accordance with the first aspect of the present invention, when the magnet lock is unlocked and the shutter plate is moved from the closed position to the open position, the first engagement member engages with the shutter plate from the closed position side, and by inserting the mechanical key into the key hole the second engagement member engages with the shutter plate from the closed position side; the engagement of the first engagement member with the shutter plate is released in response to pivoting to the ON position by the mechanical key, but the second engagement member remains engaged with the shutter plate, and as long as the mechanical key is inserted into the key hole the shutter plate is therefore retained at the open position. Furthermore, when the mechanical key is withdrawn from the key hole, the engagement of the second engagement member with the shutter plate is released, and the shutter plate therefore automatically returns from the open position to the closed position by virtue of the resilient force of the resilient means. That is, in response to withdrawing the mechanical key inserted into the key hole the shutter plate automatically returns to the closed position, and it is therefore possible to enhance the operability and ensure that closing the shutter plate is not forgotten.

Moreover, since the first and second engagement members, the cam means for moving the first and second engagement members, and the resilient means for urging the shutter plate to the closed position side are housed within the casing so that they move along a plane perpendicular to the axis of the key hole, it is possible to form the casing so that it is compact in a direction along the axis of the key hole, and the length of the mechanical key can accordingly be made short.

In accordance with the second aspect of the present invention, when the magnet lock is unlocked and the shutter plate is moved from the closed position to the open position, the first engagement member engages with the shutter plate or the coupling member coupled to the shutter plate from the closed position side, and by inserting the mechanical key into the key hole the second engagement member engages with the shutter plate or the coupling member from the closed position side; the engagement of the first engagement member with the shutter plate or the coupling member is released in response to pivoting to the ON position by the mechanical key, but the second engagement member remains engaged with the shutter plate or the coupling member, and as long as the mechanical key is inserted into the key hole the shutter plate is therefore retained at the open position. Furthermore, when the mechanical key is withdrawn from the key hole at the locked position, the engagement of the second engagement member with the shutter plate or the coupling member is released, and the shutter plate therefore automatically returns from the open position to the closed position by virtue of the resilient force of the resilient means. That is, in response to withdrawing the mechanical key at the locked position when parking for a long time the shutter plate automatically returns to the closed position, and it is therefore possible to enhance the operability and ensure that closing the shutter plate is not forgotten, thus enhancing the theft resistance. On the other hand, as when parking for a short time, when the mechanical key inserted into the key hole is withdrawn at the OFF position, the engaged state of the second engagement member with the shutter plate or the coupling member is maintained, the shutter plate does not automatically return to the closed position at the OFF position, and if, as when parking for a short time, the necessity of closing the shutter plate is low, the shutter plate is not closed, thus enhancing the operability.

Moreover, since the first and second engagement members, the cam means for moving the first and second engagement members, and the resilient means for urging the shutter plate to the closed position side are housed in the casing so that they move along a plane perpendicular to the axis of the key hole, it is possible to form the casing so that it is compact in a direction along the axis of the key hole, and the length of the mechanical key can accordingly be made short.

In accordance with the third aspect of the present invention, since the coupling member abuts against and engages with the shutter plate from the open position side so as to urge the shutter plate toward the closed position side by virtue of the resilient urging force of the resilient means and the coupling member is provided with the first and second latching parts with which the first and second retaining members engage, even when the shutter plate is at the open position while the mechanical key is withdrawn from the key hole at the OFF position, using the magnet lock as necessary enables the shutter plate to be pivoted to the closed position while the second engagement member remains engaged with the coupling member.

In accordance with the fourth aspect of the present invention, when the magnet lock is unlocked and the shutter plate is moved from the closed position to the open position, the first engagement member engages with the shutter plate; by inserting the mechanical key into the key hole the second engagement member engages with the shutter plate and the engagement of the first engagement member with the shutter plate is released, and as long as the mechanical key is inserted into the key hole the shutter plate is therefore retained at the open position. Furthermore, when the mechanical key is withdrawn from the key hole, the engagement of the second engagement member with the shutter plate is released, and the shutter plate therefore automatically returns from the open position to the closed position by virtue of the resilient force of the resilient means. That is, in response to withdrawing the mechanical key inserted into the key hole the shutter plate automatically returns to the closed position, and it is therefore possible to enhance the operability and ensure that closing the shutter plate is not forgotten.

Moreover, since the resilient means for urging the shutter plate to the closed position side, and the shutter plate retaining means having the first and second engagement members are housed within the casing so that they move along a plane perpendicular to the axis of the key hole, it is possible to form the casing so that it is compact in a direction along the axis of the key hole, and the length of the mechanical key can accordingly be made short.

### BRIEF DESCRIPTION OF DRAWINGS

[FIG. 1] FIG. 1 is a front view of a cylinder lock protection system in a state in which a key hole at a locked position is closed by a shutter plate. (first embodiment)
[FIG. 2] FIG. 2 is a sectional view along line 2-2 in FIG. 1. (first embodiment)
[FIG. 3] FIG. 3 is an exploded perspective view of the cylinder lock protection system. (first embodiment)
[FIG. 4] FIG. 4 is a partially cutaway side view of a mechanical key and a magnet key. (first embodiment)
[FIG. 5] FIG. 5 is a sectional view along line 5-5 in FIG. 2. (first embodiment)
[FIG. 6] FIG. 6 is a sectional view along line 6-6 in FIG. 2. (first embodiment)
[FIG. 7] FIG. 7 is an exploded perspective view of cam means. (first embodiment)
[FIG. 8] FIG. 8 is a sectional view, corresponding to FIG. 5, in a state in which the shutter plate is present between a closed position and an open position. (first embodiment)
[FIG. 9] FIG. 9 is a sectional view, corresponding to FIG. 6, in a state in which the shutter plate is present between the closed position and the open position. (first embodiment)
[FIG. 10] FIG. 10 is a sectional view, corresponding to FIG. 5, in a state in which the shutter plate is at the open position. (first embodiment)
[FIG. 11] FIG. 11 is a sectional view, corresponding to FIG. 6, in a state in which the shutter plate is at the open position. (first embodiment)
[FIG. 12] FIG. 12 is a sectional view, corresponding to FIG. 6, in a state in which the mechanical key is inserted into the key hole at the locked position. (first embodiment)
[FIG. 13] FIG. 13 is a sectional view, corresponding to FIG. 6, in a state in which pivoting to an OFF position is carried out by the mechanical key. (first embodiment)
[FIG. 14] FIG. 14 is a sectional view, corresponding to FIG. 6, in a state in which pivoting to an ON position is carried out by the mechanical key. (first embodiment)
[FIG. 15] FIG. 15 is a sectional view, corresponding to FIG. 6, in a state in which the mechanical key is withdrawn at the OFF position. (first embodiment)
[FIG. 16] FIG. 16 is a front view of a cylinder lock protection system in a state in which a key hole at a locked position is closed by a shutter plate. (second embodiment)
[FIG. 17] FIG. 17 is a sectional view along line 17-17 in FIG. 16. (second embodiment)
[FIG. 18] FIG. 18 is an exploded perspective view of the cylinder lock protection system. (second embodiment)
[FIG. 19] FIG. 19 is a sectional view along line 19-19 in FIG. 17 in a state in which the shutter plate is at a closed position. (second embodiment)
[FIG. 20] FIG. 20 is a sectional view along line 20-20 in FIG. 17 in a state in which the shutter plate is at an open position. (second embodiment)
[FIG. 21] FIG. 21 is a sectional view along line 21-21 in FIG. 17 in a state in which the shutter plate is at the open position and the key hole is at the locked position. (second embodiment)
[FIG. 22] FIG. 22 is a sectional view, corresponding to FIG. 21, in a state in which a mechanical key is inserted into the key hole at the locked position. (second embodiment)
[FIG. 23] FIG. 23 is a sectional view, corresponding to FIG. 21, in a state in which pivoting to an OFF position is carried out by the mechanical key. (second embodiment)
[FIG. 24] FIG. 24 is a sectional view, corresponding to FIG. 21, in a state in which pivoting to an ON position is carried out by the mechanical key. (second embodiment)
[FIG. 25] FIG. 25 is a sectional view, corresponding to FIG. 21, in a state in which, after the mechanical key is withdrawn at the OFF position, the shutter plate is pivoted to the closed position by the magnet key. (second embodiment)
[FIG. 26] FIG. 26 is a front view of a cylinder lock protection system in which a key hole at an OFF position is closed by a shutter plate. (third embodiment)
[FIG. 27] FIG. 27 is a sectional view along line 27-27 in FIG. 26. (third embodiment)
[FIG. 28] FIG. 28 is an exploded perspective view of the cylinder lock protection system. (third embodiment)
[FIG. 29] FIG. 29 is a sectional view along line 29-29 in FIG. 27. (third embodiment)
[FIG. 30] FIG. 30 is a sectional view along line 30-30 in FIG. 27. (third embodiment)
[FIG. 31] FIG. 31 is an enlarged sectional view along line 31-31 in FIG. 26. (third embodiment)
[FIG. 32] FIG. 32 is a sectional view along line 32-32 in FIG. 27. (third embodiment)
[FIG. 33] FIG. 33 is a sectional view, corresponding to FIG. 29, in a state in which the shutter plate is at an open position and a mechanical key is not inserted into the key hole at the OFF position. (third embodiment)
[FIG. 34] FIG. 34 is a sectional view, corresponding to FIG. 30, in a state in which the shutter plate is at the open position and a mechanical key is not inserted into the key hole at the OFF position. (third embodiment)
[FIG. 35] FIG. 35 is a sectional view, corresponding to FIG. 31, in a state in which the shutter plate is at the open position and the mechanical key is not inserted into the key hole at the OFF position. (third embodiment)
[FIG. 36] FIG. 36 is a sectional view, corresponding to FIG. 29, in a state in which the mechanical key is inserted into the key hole at the OFF position. (third embodiment)
[FIG. 37] FIG. 37 is a sectional view, corresponding to FIG. 30, in a state in which the mechanical key is inserted into the key hole at the OFF position. (third embodiment)
[FIG. 38] FIG. 38 is a sectional view, corresponding to FIG. 31, in a state in which the mechanical key is inserted into the key hole at the OFF position. (third embodiment)
[FIG. 39] FIG. 39 is a sectional view, corresponding to FIG. 30, when the mechanical key is pivoted to a locked position while being inserted into the key hole. (third embodiment)
[FIG. 40] FIG. 40 is a sectional view, corresponding to FIG. 30, in a state in which the mechanical key is withdrawn from the key hole at the locked position. (third embodiment)

### EXPLANATION OF REFERENCE NUMERALS AND SYMBOLS

- 20: cylinder lock
- 21: cylinder body
- 22, 90, 132: casing
- 27: inner cylinder
- 28: key hole
- 29, 95, 137: insertion hole
- 33: mechanical key
- 34, 99, 141: shutter plate
- 35: magnet lock
- 57, 106, 147: return spring which is resilient means
- 58, 108, 148: first engagement member
- 59, 109, 149: second engagement member
- 60, 110: cam means
- 105: coupling member
- 122: first latching part
- 128: second latching part
- 150: shutter plate retaining means

### BEST MODE FOR CARRYING OUT THE INVENTION

Modes for carrying out the present invention are explained below by reference to the attached drawings.

### EMBODIMENT 1

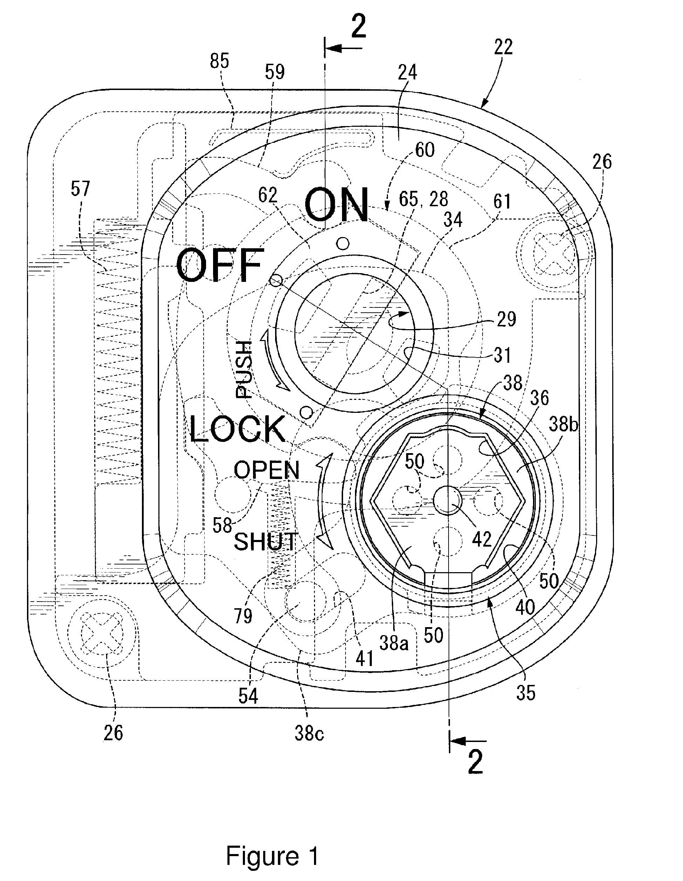

FIG. 1 to FIG. 15 show a first embodiment of the present invention.

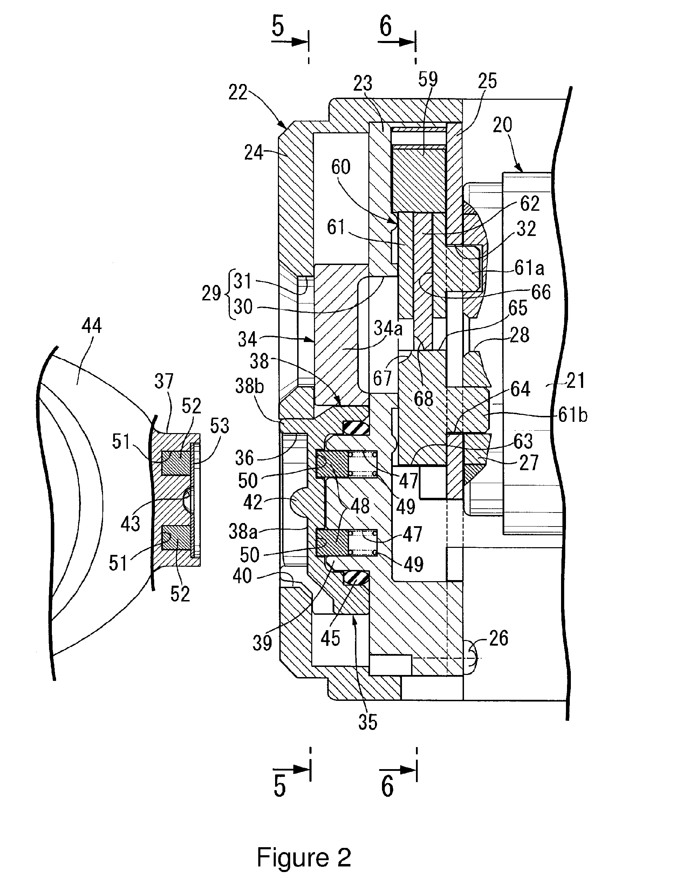

First, in FIG. 1 and FIG. 2, a cylinder body 21 of a cylinder lock 20 for a vehicle, for example, a two-wheeled motor vehicle is provided on a head pipe (not illustrated) of a vehicle body frame, and a front end part of the cylinder body 21 is covered by a casing 22. The casing 22 includes a case member 23, made of a non-magnetic material, mounted on the front end part of the cylinder body 21, a cover member 24, made of a non-magnetic material, mounted on the case member 23, and a flat plate-shaped back plate 25 sandwiching the case member 23 between itself and the cover member 24; securing the case member 23, the cover member 24, and the back plate 25 by a plurality of, for example, two, screw members 26 and 26 forms the casing 22, and the casing 22 is fixed to the cylinder body 21.

The cylinder lock 20 has an inner cylinder 27, which is pivotably inserted into the cylinder body 21, this inner cylinder 27 is provided with a rectangular key hole 28, which is long in a direction perpendicular to the pivot axis of the inner cylinder 27, and the key hole 28 opens in a central part at the front end of the cylinder lock 20.

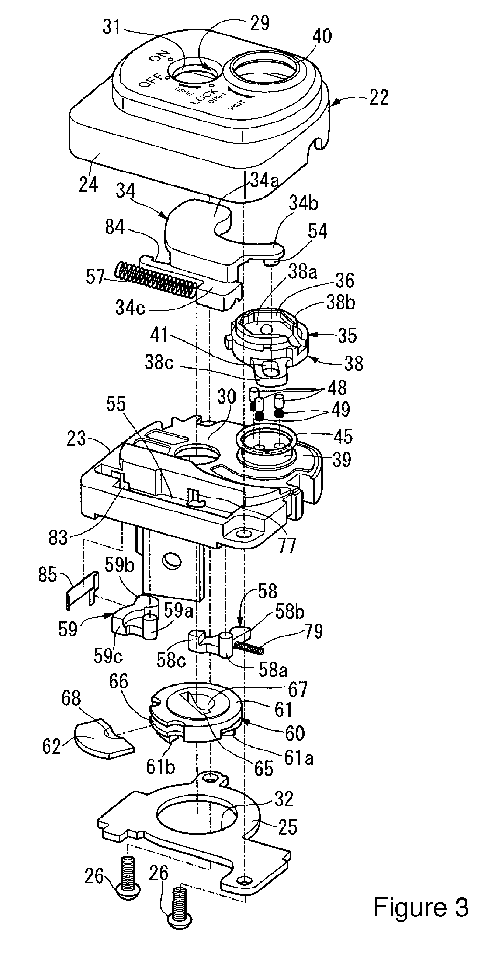

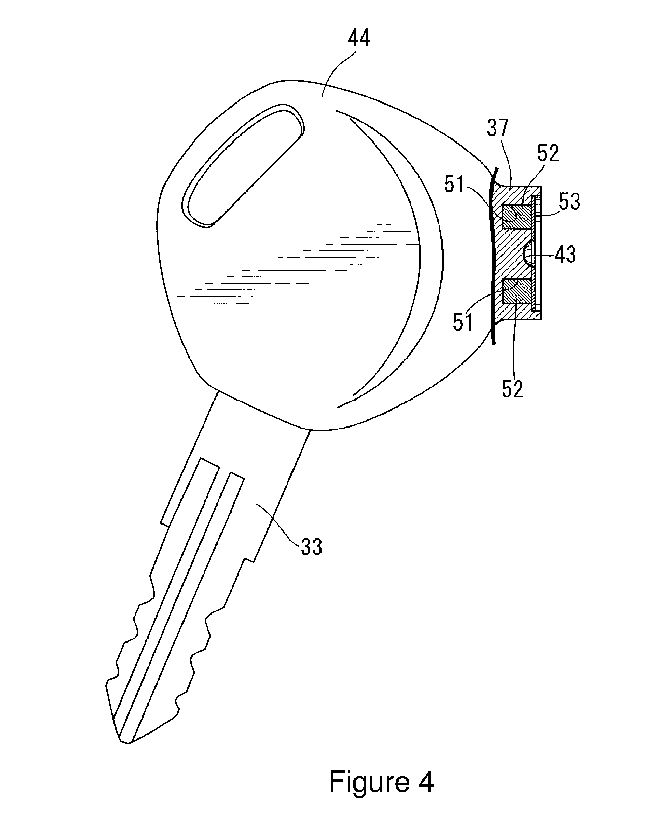

Referring in addition to FIG. 3, the casing 22 is provided with an insertion hole 29 corresponding to the key hole 28. This insertion hole 29 is formed from circular through holes 30 and 31 coaxially provided in the case member 23 and the cover member 24 respectively, and an outer end part of the through hole 31 of the cover member 24 is formed in a tapered shape so that insertion of a mechanical key 33 (see FIG. 4) is easy. Furthermore, the back plate 25 is provided with an opening 32, which has a larger diameter than those of the through holes 30 and 31 of the case member 23 and the cover member 24, so as to correspond to the through holes 30 and 31.

Housed within the casing 22 between the case member 23 and the cover member 24 is a shutter plate 34, which is capable of moving along a plane perpendicular to the axis of the key hole 28 between a closed position at which the insertion hole 29 and the key hole 28 are closed and an open position at which the insertion hole 29 and the key hole 28 are opened.

Movement of the shutter plate 34 from the closed position to the open position is allowed by fitting a magnet key 37 into a mating recess 36 of a magnet lock 35 disposed in the casing 22; the magnet lock 35 includes a rotor 38, which is formed separately from the shutter plate 34, and the mating recess 36 is formed in the rotor 38.

A circular cross-section support projection 39 is projectingly provided integrally with the case member 23 of the casing 22, the support projection 39 projecting on the cover member 24 side at a position spaced from the insertion hole 29, and a circular opening 40 is provided in the cover member 24 in a portion corresponding to the support projection 39.

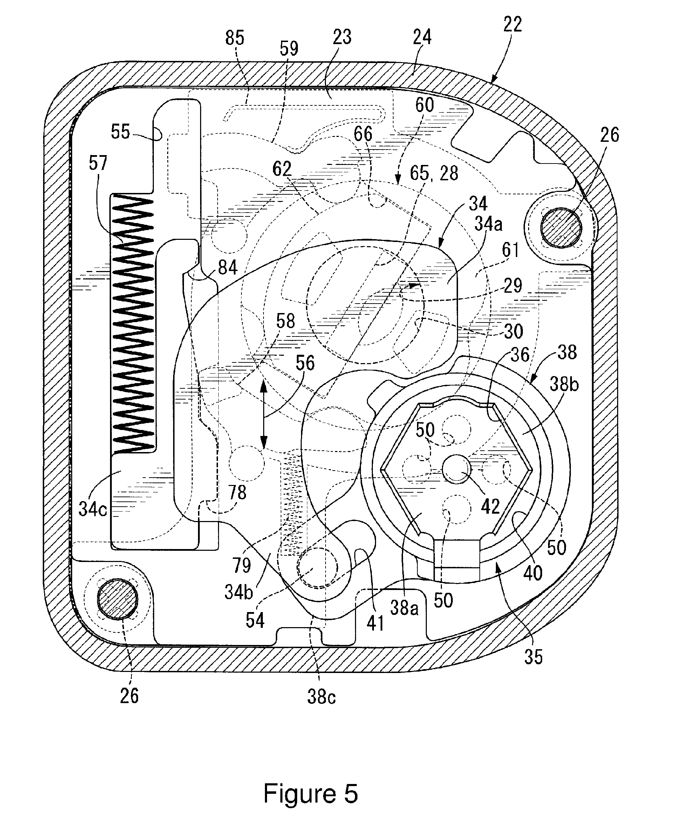

Referring in addition to FIG. 5, the rotor 38 is formed from a non-magnetic material so as to integrally have a substantially cylindrical rotor main portion 38b having a facing wall portion 38a facing the extremity of the support projection 39 in an axially intermediate part and a connecting arm portion 38c extending outward from the rotor main portion 38b, an oblong hole-shaped connection hole 41 being provided in the tip of the connecting arm portion 38c. The support projection 39 is fitted into an inner end side of the rotor main portion 38b, and the rotor main portion 38b is pivotably supported by the support projection 39 with an O-ring 45 disposed between itself and a base part of the support projection 39. Moreover, the outer end of the rotor main portion 38b is disposed so as to face the opening 40, and an outer end part of the rotor main portion 38b forms the mating recess 36.

The mating recess 36 of the rotor 38 is formed so as to have an irregular polygonal cross-sectional shape, and a projection 42 is projectingly formed in a substantially central part of the mating recess 36. Only a magnet key 37 having a cross-sectional shape corresponding to the cross-sectional shape of the mating recess 36 and having a recess 43 that allows the projection 42 to be fitted therewithin can be fitted into the mating recess 36, and this magnet key 37 is, as shown in FIG. 4, attached to a grip part 44 provided on a legitimate mechanical key 33 that can be inserted into the key hole 28.

The extremity of the support projection 39 is provided with a plurality of, for example, four, sliding recesses 47 corresponding, for example, to each corner of a square so as to open toward the opposing wall 38a of the rotor 38, rod-shaped permanent magnets 48 are slidably fitted into three sliding recesses 47 selected from the sliding recesses 47 so that the magnetic poles are arranged on the facing wall portion 38a side in an appropriate combination, and springs 49 for spring-biasing the permanent magnets 48 toward the side on which they project from the extremity of the support projection 39 are disposed between bottom parts of the sliding recesses 47 and the permanent magnets 48.

Four engagement recesses 50 are provided in the facing wall portion 38a of the rotor 38, and when parts of the permanent magnets 48 engage with three of these engagement recesses 50, pivoting of the rotor 38 is prevented.

On the other hand, the magnet key 37 is provided with a plurality of, for example, four housing recesses 51 at positions corresponding to the four engagement recesses 50 provided in the facing wall portion 38a of the rotor 38, so as to open toward the facing wall portion 38a of the rotor 38, and rod-shaped permanent magnets 52 are housed in three of the housing recesses 51. The open end of each of the housing recesses 51 is closed by a closing plate 53, made of a non-magnetic material, fixed to the magnet key 37.

The permanent magnets 52 disposed in the magnet key 37 are housed within the housing recesses 51 so that the same magnetic poles as those on the facing wall portion 38a side of the permanent magnets 48 on the support projection 39 side are disposed on the facing wall portion 38a side, and when the legitimate magnet key 37 is fitted into the mating recess 36, due to repulsion between like magnetic poles the permanent magnets 48 on the support projection 39 side are pushed into the sliding recesses 47 so that they separate from the engagement recesses 50 against the spring force of the springs 49, thereby allowing the rotor 38 to pivot.

The shutter plate 34 integrally has a flat plate-shaped shutter main portion 34a that can close the insertion hole 29, a connecting arm portion 34b extending from the shutter main portion 34a toward the connecting arm portion 38c of the rotor 38, and a guide portion 34c connected at right angles to the shutter main portion 34a on the side opposite to the insertion hole 29 and the opening 40; a connecting pin 54 is projectingly provided integrally with the connecting arm portion 34b, the connecting pin 54 being inserted into the connection hole 41 of the connecting arm portion 38c of the rotor 38.

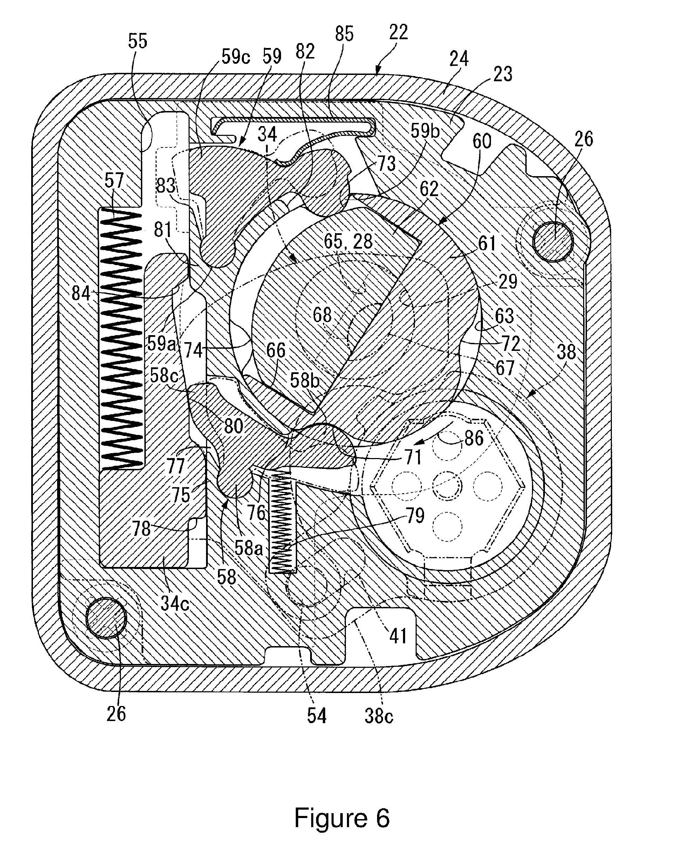

Referring in addition to FIG. 6, the guide portion 34c is slidably fitted into a guide groove 55 provided in the case member 23, and the guide portion 34c and the guide groove 55 are formed so as to be long along the direction of movement shown by arrow 56 (see FIG. 5) so that pivoting the rotor 38 by operating the magnet key 37 in a state in which the magnet key 37 is fitted into the mating recess 36 and the magnet lock 35 is thereby unlocked guides movement of the shutter plate 34 in the movement direction 56 along a plane perpendicular to the axis of the key hole 28 between the closed position, in which the insertion hole 29 is closed, and the open position, in which the insertion hole 29 is opened. Moreover, a coil-shaped return spring 57, which is resilient means, is provided in a compressed state between the case member 23 and the guide portion 34c of the shutter plate 34, and the shutter plate 34 is urged toward the closed position side by means of the resilient force exhibited by the return spring 57 housed in the guide groove 55.

The inner cylinder 27 of the cylinder lock 20 can pivot from a locked position (LOCK) to an ON position (ON) via an OFF position (OFF) by operation of the mechanical key 33 inserted into the key hole 28, and an engine, which is not illustrated, can be fired up at the ON position. In the cover member 24 of the casing 22, the LOCK, OFF, and ON positions are displayed in an area around the insertion hole 29, that is, the through hole 31, as shown in FIG. 1, and aligning the longitudinal direction in a cross-section of the key hole 28, which has a rectangular cross-sectional shape, with each of the LOCK, OFF, and ON positions enables the inner cylinder 27 to be positioned at the locked position, the OFF position, and the ON position. At the locked position, handlebars, which are not illustrated, are in a locked state, and the cylinder lock 20 is provided with a mechanism (not illustrated) that requires the mechanical key 33 to be pushed when pivoting the inner cylinder 27 between the locked position and the OFF position. Furthermore, both when the inner cylinder 27 is at the locked position and when the inner cylinder 27 is at the OFF position, inserting the mechanical key 33 into the key hole 28 and withdrawing it therefrom are possible.

The return spring 57, first and second engagement members 58 and 59 capable of engaging with the shutter plate 34 at the open position and retaining the shutter plate 34 at the open position, and cam means 60 for moving the first and second engagement members 58 and 59 are housed within the casing 22 so that they can move along a plane perpendicular to the axis of the key hole 28.

The cam means 60 is formed from a disk-shaped cam plate 61 pivotably retained on the case member 23, and a push plate 62 fitted into the cam plate 61 so that it can slide in a radial direction of the cam plate 61, and the cam plate 61 is connected to the inner cylinder 27 of the cylinder lock 20 so that it cannot pivot relative thereto.

A circular support recess 63, which is coaxial with the insertion hole 29, is provided in a face of the case member 23 on the cylinder lock 20 side, and the cam plate 61 is pivotably fitted into the support recess 63. On the other hand, the circular opening 32, which faces part of the cam plate 61 fitted into the support recess 63, is provided in the back plate 25 secured to the case member 23 so as to be coaxial with the insertion hole 29, the back plate 25 is secured to the case member 23 so as to sandwich an outer peripheral part of the cam plate 61 between itself and the case member 23, and a plurality of, for example, two, connecting shaft portions 61 a and 61 b provided integrally with the cam plate 61 and running through the opening 32 are fitted into the inner cylinder 27 of the cylinder lock 20, the cam plate 61 thereby being connected to the inner cylinder 27 so that it cannot pivot relative thereto.

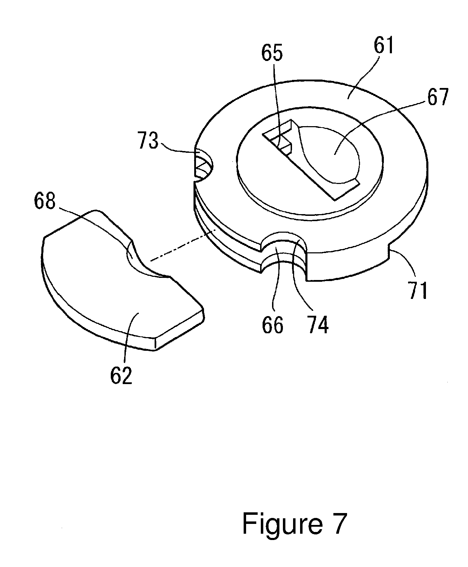

Referring in addition to FIG. 7, a through hole 65 is provided in a middle part of the cam plate 61 so as to be present between the insertion hole 29 and the key hole 28, the through hole 65 having a rectangular cross-sectional shape so as to correspond to the key hole 28 of the cylinder lock 20. Furthermore, a mating hole 66 is provided in the cam plate 61 so as to extend in a radial direction of the cam plate 61, the mating hole 66 having its inner end opening in the through hole 65 and its outer end opening on the outer periphery of the cam plate 61, and the push plate 62 is slidably fitted into the mating hole 66.

An inner end part of the push plate 62 is formed so that it can block the through hole 65, and the outer end of the push plate 62 is formed as an arc shape having the same curvature as that of the outer periphery of the cam plate 61. When the inner end part of the push plate 62 is at a position at which the through hole 65 is blocked, the outer end of the push plate 62 is at a position further inward than the outer periphery of the cam plate 61, and when the inner end part of the cam plate 62 is at a position at which the through hole 65 is opened, the outer end of the push plate 62 is at a position at which the outer end is flush with the outer periphery of the cam plate 61.

Moreover, provided on a face of the cam plate 61 facing the insertion hole 29 side on the side opposite to the push plate 62 relative to the through hole 65 is an arc-shaped guide face 67 that guides the tip of the mechanical key 33 inserted into the insertion hole 29 to the through hole 65 side, and provided in a middle part in the width direction of the inner end part of the push plate 62 is a pressure-receiving face 68, against which the tip of the mechanical key 33 guided by the guide face 67 abuts. This pressure-receiving face 68 is formed such that, by virtue of the tip of the mechanical key 33 pushed into the insertion hole 29 in order to be inserted into the key hole 28 abutting against the pressure-receiving face 68, a force toward the radially outward direction of the cam plate 61 acts on the push plate 62 in order to open the through hole 65, and the mechanical key 33 inserted into the insertion hole 29 and abutting against the pressure-receiving face 68 is inserted into the key hole 28 via the through hole 65 so as to push away the push plate 62 in the radially outward direction of the cam plate 61.

Furthermore, first to fourth recesses 71, 72, 73, and 74 are provided in the outer periphery of the cam plate 61 at intervals in the peripheral direction. The first and second recesses 71 and 72 have an identical shape, and are formed in substantially half, on the back plate 25 side, of the thickness along the axial direction of the cam plate 61. Moreover, the third and fourth recesses 73 and 74 have an identical shape, and are formed over the entirety of the axial thickness of the cam plate 61. Furthermore, the interval between the first and second recesses 71 and 72 is the same as the interval between the third and fourth recesses 73 and 74, and the third and fourth recesses 73 and 74 are disposed so as to transect opposite end parts, along the peripheral direction of the cam plate 61, of the mating hole 66.

The first engagement member 58 integrally has a substantially circular pivot support portion 58a fitted into and swingably supported on a support part 75 provided on the case member 23, a mating portion 58b extending from the pivot support portion 58a to the cam plate 61 side, and an engagement portion 58c extending from the pivot support portion 58a toward the guide portion 34c of the shutter plate 34, and is disposed between the back plate 25 and the case member 23 of the casing 22.

The tip of the mating portion 58b can abut against the outer periphery of the cam plate 61, and the case member 23 is provided with a cutout 76 by cutting out part of a side wall of the support recess 63, the cutout 76 allowing part of the outer periphery of the cam plate 61 to face the first engagement member 58 side. When the cam plate 61, together with the inner cylinder 27 of the cylinder lock 20, is at the locked position the tip of the mating portion 58b can be fitted into the first recess 71 of the cam plate 61, and when the cam plate 61, together with the inner cylinder 27, is at the OFF position, the tip of the mating portion 58b can be fitted into the second recess 72 of the cam plate 61. Moreover, since the first and second recesses 71 and 72 are formed in substantially half of the thickness along the axial direction of the cam plate 61, the mating portion 58b is also formed so as to have a thickness of substantially half of the thickness along the axial direction of the cam plate 61.

Furthermore, the case member 23 is provided with a window 77 by cutting out part of a side wall of the guide groove 55, the window 77 allowing part of the guide portion 34c to face the first engagement member 58 side, and the guide portion 34c is provided with a first latching step 78, the first latching step 78 allowing the tip of the engagement portion 58c projecting from the window 77 to engage with the first latching step 78 from the closed position side when the shutter plate 34 is at the open position.

A coil-shaped first spring 79 is provided in a compressed state between the first engagement member 58 and the case member 23, and the first engagement member 58 is urged by the spring force of the first spring 79 to the side on which the mating portion 58b is made to abut against the outer periphery of the cam plate 61 and the engagement portion 58c is made to abut against the guide portion 34c.

Moreover, the first engagement member 58 can engage with the first latching step 78 of the guide portion 34c in a state in which the mating portion 58b is fitted into the first recess 71 or the second recess 72 of the cam plate 61, and in a state in which the mating portion 58b abuts against the outer periphery of the cam plate 61 at a position other than the first and second recesses 71 and 72, the tip of the engagement portion 58c is at a position facing the window 77 and the tip of the engagement portion 58c does not engage with the first latching step 78.

Furthermore, the first and second recesses 71 and 72 are formed such that, in a state in which the mating portion 58b is fitted into these recesses 71 and 72, when the cam plate 61, together with the inner cylinder 27, pivots in the direction shown by arrow 86 from the locked position toward the ON position side, the first engagement member 58 is pivoted in a clockwise direction in FIG. 6 against the spring force of the first spring 77 so as to allow the mating portion 58b to ride over the outer periphery of the cam plate 61 and allow the tip of the engagement portion 58c to move back from the guide groove 55 toward the window 77 side.

When the shutter plate 34 is at the closed position as shown in FIG. 5 and FIG. 6, the mating portion 58b of the first engagement member 58 is fitted into the first recess 71, and the engagement portion 58c abuts against one abutment position 80 (see FIG. 6) on a side face of the guide portion 34c. A section of the side face of the guide portion 34c on the first engagement member 58 side from the abutment position 80 to the first latching step 78 is formed so that it abuts against the engagement portion 58c when the shutter plate 34, that is, the guide portion 34c, moves upward in FIG. 6 from the closed position to the open position, thereby pivoting the first engagement member 58 in the clockwise direction in FIG. 6 and making the mating portion 58b separate from the first recess 71.

The second engagement member 59 integrally has a substantially circular pivot support portion 59a fitted into and swingably supported on a support part 81 provided on the case member 23, a mating portion 59b extending from the pivot support portion 59a to the cam plate 61 side, and an engagement portion 59c extending from the pivot support portion 59a to the guide groove 55 side, and is disposed between the case member 23 of the casing 22 and the back plate 25.

The tip of the mating portion 59b can abut against the outer periphery of the cam plate 61, and the case member 23 is provided with a cutout 82 by cutting out a part of a side wall of the support recess 63, the cutout 82 allowing part of the outer periphery of the cam plate 61 to face the second engagement member 59 side. When the cam plate 61, together with the inner cylinder 27 of the cylinder lock 20, is at the locked position, the tip of the mating portion 59b can be fitted into the third recess 73 of the cam plate 61, and when the cam plate 61, together with the inner cylinder 27, is at the OFF position, the tip of the mating portion 59b can be fitted into the fourth recess 74 of the cam plate 61. The third and fourth recesses 73 and 74 are formed over the whole axial thickness of the cam plate 61, the mating portion 59b is formed so as to have a thickness equal to or larger than the axial thickness of the cam plate 61 in order for it to be fitted into the third recess 73 or the fourth recess 74, and the mating portion 59b does not fit into the first and second recesses 71 and 72.

Furthermore, the case member 23 is provided with a window 83 by cutting out part of the side wall of the guide groove 55, the window 83 allowing part of the guide portion 34c of the shutter plate 34 that has moved to the open position to face the second engagement member 59 side, and the guide portion 34c is provided with a second latching step 84, the tip of the engagement portion 59c projecting from the window 83 engaging with the second latching step 84 from the closed position side when the shutter plate 34 is at the open position.

A second spring 85, which is a leaf spring, is provided between the second engagement member 59 and the case member 23, and the second engagement member 59 is urged by the spring force of the second spring 85 to the side on which the mating portion 59b is made to abut against the outer periphery of the cam plate 61.

Moreover, in a state in which the tip of the mating portion 59b of the second engagement member 59 is fitted into the third recess 73 or the fourth recess 74 of the cam plate 61, the tip of the mating portion 59b abuts against an outer end part of the push plate 62, which is closing the through hole 65 of the cam plate 61, and when the push plate 62 is pushed outwardly in the radial direction of the cam plate 61 by the mechanical key 33 being inserted into the through hole 65, the second engagement member 59 pivots in an anticlockwise direction in FIG. 6 against the spring force of the second spring 85, and the tip of the engagement portion 59c projects into the guide groove 55 through the window 83 so as to engage with the second latching step 84 of the guide portion 34c.

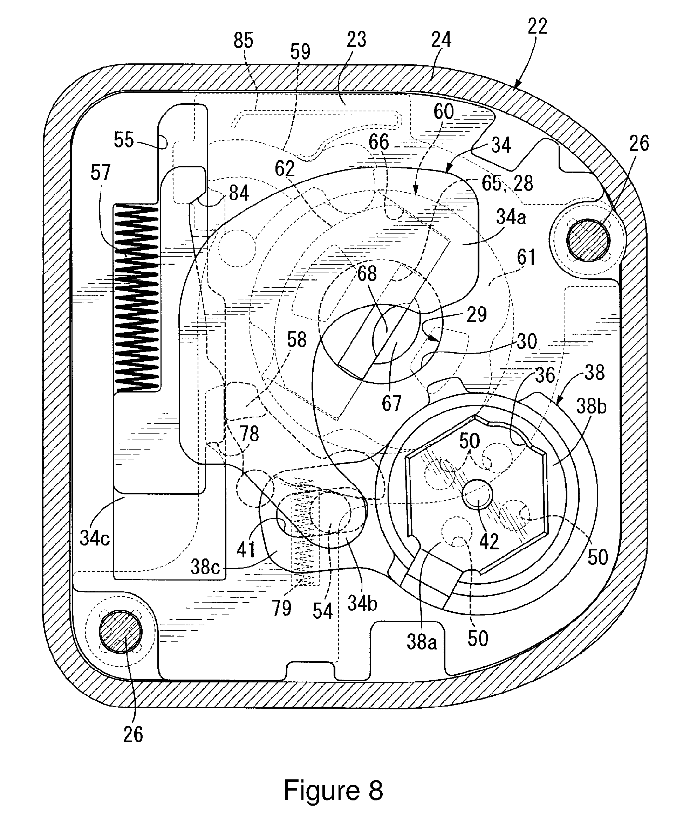

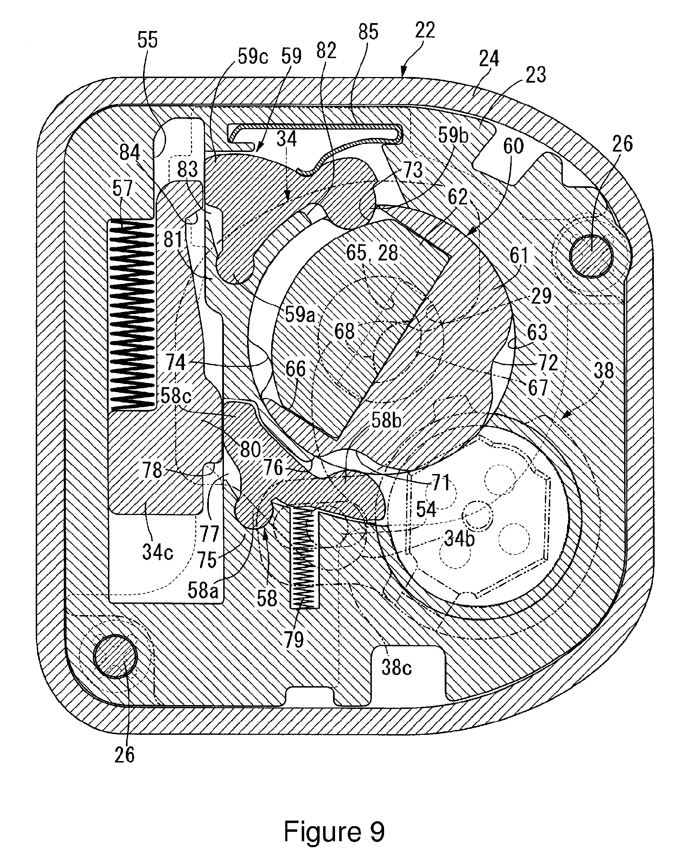

The operating condition of each component during a process in which, in a state in which the inner cylinder 27 of the cylinder lock 20 is at the locked position and the shutter plate 34 is at the closed position, the magnet lock 35 is unlocked to thus move the shutter plate 34 to the open position, and after the mechanical key 33 is inserted into the key hole 28 and pivoted, the mechanical key 33 is withdrawn is now explained; in a state in which the shutter plate 34 is being moved from the closed position to the open position after the magnet lock 35 is unlocked, as shown in FIG. 8 and FIG. 9, movement of the guide portion 34c of the shutter plate 34 makes the first engagement member 58 pivot against the spring force of the first spring 79 so as to make the mating portion 58b separate from the first recess 71 of the cam plate 61.

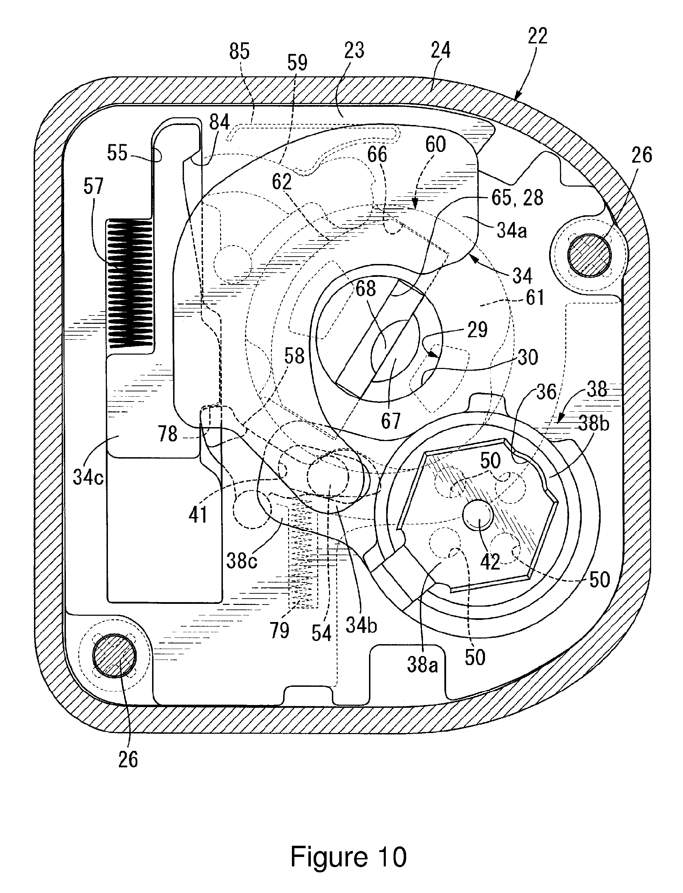

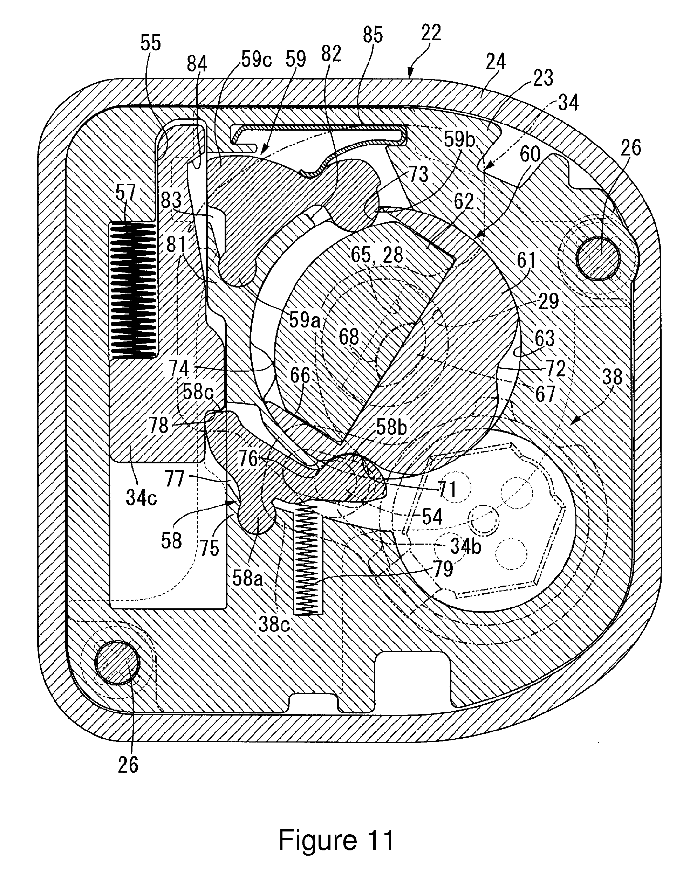

When the shutter plate 34 reaches the open position, as shown in FIG. 10 and FIG. 11, the insertion hole 29 is opened, the engagement portion 58c of the first engagement member 58 pivotingly urged by the first spring 79 engages with the first latching step 78 of the guide portion 34c of the shutter plate 34 from the closed position side, and in spite of the action of the spring force of the return spring 57, the shutter plate 34 is retained at the open position.

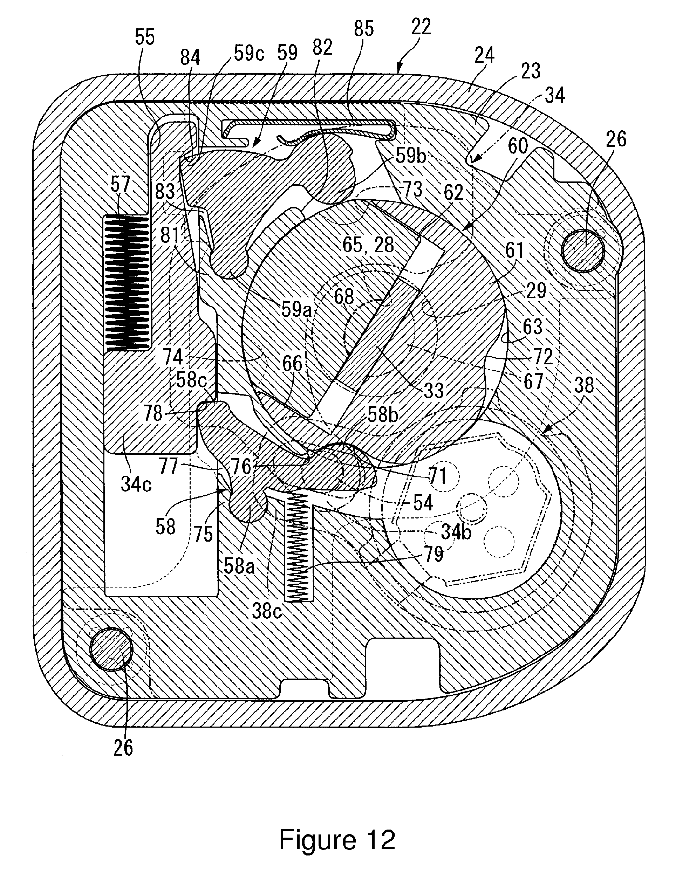

Subsequently, the mechanical key 33 is inserted into the insertion hole 29; when as shown in FIG. 12 the mechanical key 33 is inserted into the through hole 65 in the cam means 60, the push plate 62 in the cam means 60 is pushed outward in the radial direction of the cam plate 61, the second engagement member 59 that has the mating portion 59b fitted into the third recess 73 pivots in the anticlockwise direction in FIG. 12, the mating portion 59b separates from the third recess 73 and the engagement portion 59c engages with the second latching step 84 of the guide portion 34c from the closed position side, and the shutter plate 34 is retained at the open position by the second engagement member 59 also.

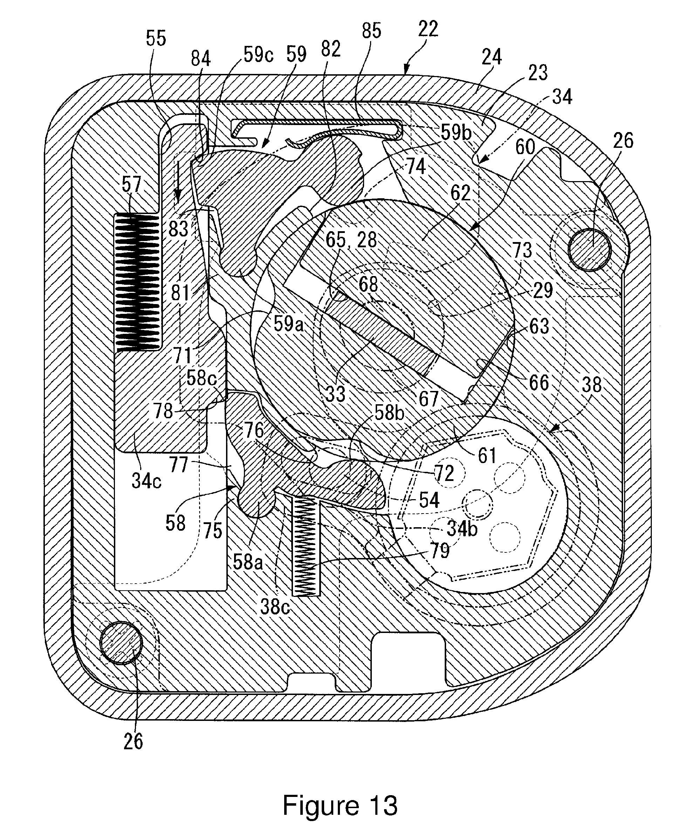

When the mechanical key 33 inserted into the key hole 28 is further pivoted to the OFF position while pushing it the first engagement member 58 is pivoted in the clockwise direction in FIG. 12 by the cam plate 61, which pivots to the OFF position together with the inner cylinder 27; as shown in FIG. 13, the mating portion 58b rides over the outer periphery of the cam plate 61, and the tip of the engagement portion 58c, which is abutting against and engaging with the first latching step 78, pushes up the guide portion 34c against the spring force of the return spring 57 and moves back to the window 77 side. Due to the tip of the engagement portion 58c moving back to the window 77 side and releasing engagement with the first latching step 77, the guide portion 34c returns so that the engagement portion 59c of the second engagement member 59 engages with the second latching step 84, and in this state the shutter plate 34 is retained at the open position by the second engagement member 59.

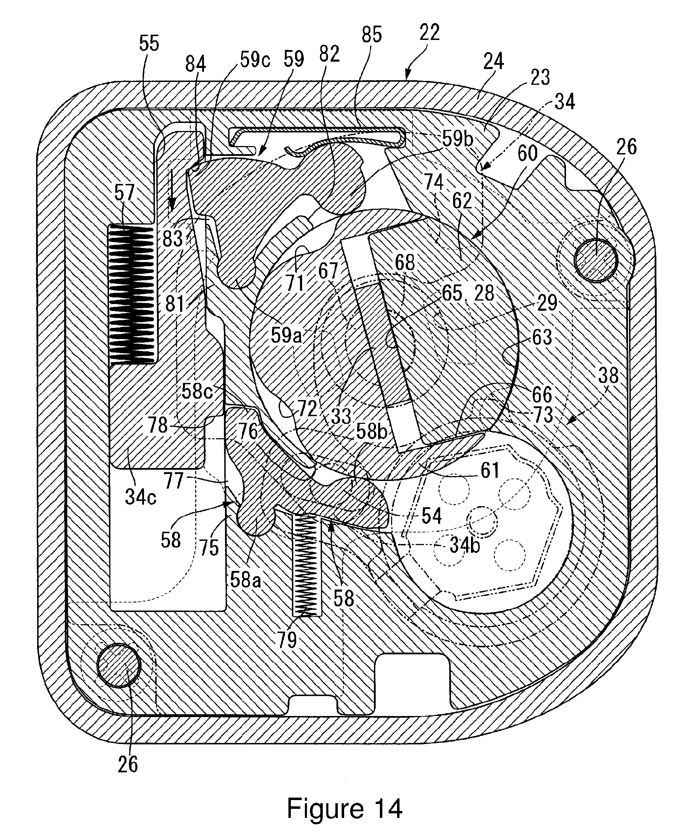

Pivoting the cam plate 61, together with the inner cylinder 27, to the ON position by means of the mechanical key 33 inserted into the key hole 28 puts the mating portion 58b of the first engagement member 58 into a state in which it abuts against the outer periphery of the cam plate 61 between the second recess 72 and the third recess 73 as shown in FIG. 14, and the second engagement member 59 attains a state in which the mating portion 59b abuts against the outer periphery of the cam plate 61 between the fourth recess 74 and the first recess 71 while the engagement portion 59c remains engaged with the second latching step 84.

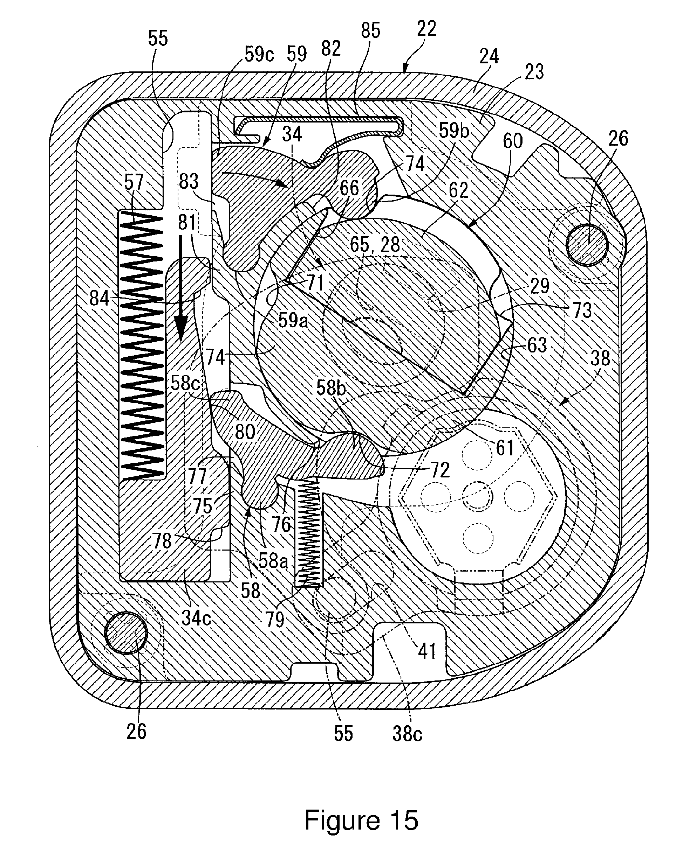

When the cam plate 61, together with the inner cylinder 27, is returned to the OFF position by means of the mechanical key 33 inserted into the key hole 28, and the mechanical key 33 is withdrawn, as shown in FIG. 15, the fourth recess 74 matches a position corresponding to the mating portion 59b of the second engagement member 59, the second engagement member 59 is fitted by the spring force of the second spring 85 into the fourth recess 74 while pushing the push plate 62 inward in the radial direction of the cam plate 61, the engagement of the engagement portion 59c of the second engagement member 59 with the second latching step 84 is released, and the shutter plate 34 is automatically returned to the closed position by the spring force of the return spring 57. In this process, the first engagement member 58 is at a position at which the mating portion 58b is fitted into the second recess 72, and in response to the guide portion 34c of the shutter plate 34 returning to the closed position, it pivots so that the mating portion 58b is fitted into the second recess 72 by the spring force of the first spring 79, and the engagement portion 58c is made to abut against the abutment position 80 of the guide portion 34c.

Furthermore, when the inner cylinder 27 and the cam plate 61 are returned to the locked position and the mechanical key 33 is withdrawn, the state shown in FIG. 6 is returned to, the second engagement member 59 is fitted into the third recess 73 and releases the engagement with the second latching step 84, the shutter plate 34 thereby automatically returns to the closed position, and the first engagement member 58 is fitted into the first recess 71.

In this way, the cam means 60 makes the first engagement member 58 engage with the shutter plate 34 from the closed position side in response to movement of the shutter plate 34 from the closed position to the open position, makes the second engagement member 59 engage with the shutter plate 34 from the closed position side in response to insertion of the mechanical key 33 into the key hole 28, releases the engagement of the first engagement member 58 with the shutter plate 34 in response to pivoting to the ON position by the mechanical key 33 inserted into the key hole 28, and releases the engagement of the second engagement member 59 with the shutter plate 34 in response to the mechanical key 33 being withdrawn from the key hole 28 at the OFF position or the locked position.

The operation of the first embodiment is now explained. When the magnet lock 35 is unlocked and the shutter plate 34 is moved from the closed position to the open position, the first engagement member 58 engages with the shutter plate 34 from the closed position side, and by inserting the mechanical key 33 into the key hole 28 the second engagement member 59 engages with the shutter plate 34 from the closed position side; the engagement of the first engagement member 58 with the shutter plate 34 is released in response to pivoting to the ON position by the mechanical key 33, but the second engagement member 59 remains engaged with the shutter plate 34, and as long as the mechanical key 33 is inserted into the key hole 28 the shutter plate 34 is therefore retained at the open position. Furthermore, when the mechanical key 33 is withdrawn from the key hole 28, the engagement of the second engagement member 59 with the shutter plate 34 is released, and the shutter plate 34 therefore automatically returns from the open position to the closed position by virtue of the resilient force of the return spring 57. That is, in response to withdrawing the mechanical key 33 inserted into the key hole 28 the shutter plate 34 automatically returns to the closed position, and it is therefore possible to enhance the operability and ensure that closing the shutter plate is not forgotten.

Moreover, since the first and second engagement members 58 and 59, the cam means 60 for moving the first and second engagement members 58 and 59, and the return spring 57 for urging the shutter plate 34 to the closed position side are housed within the casing 22 so that they move along a plane perpendicular to the axis of the key hole 28, it is possible to form the casing 22 so that it is compact in a direction along the axis of the key hole 28, and the length of the mechanical key 33 can accordingly be made short.

### EMBODIMENT 2

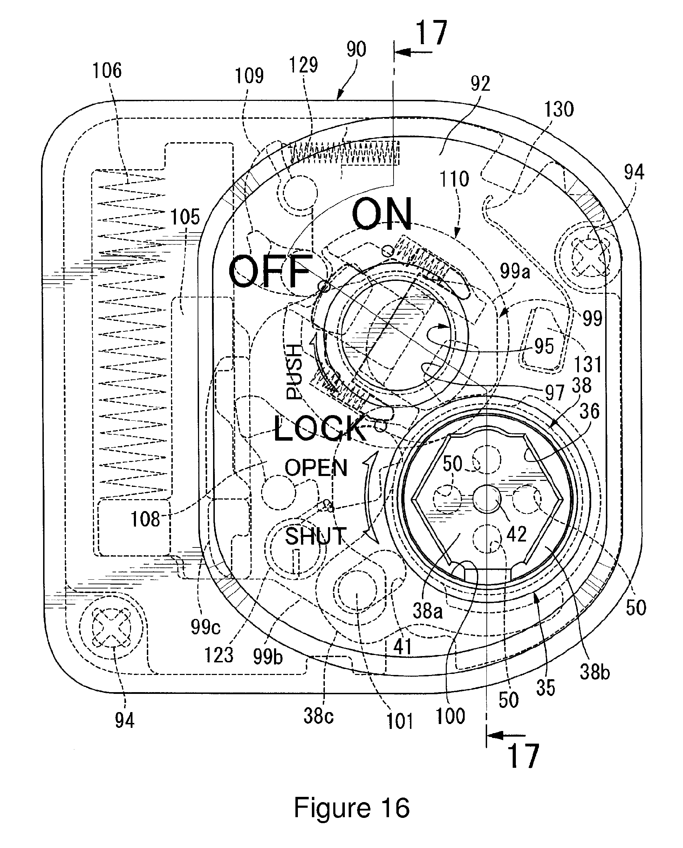

FIG. 16 to FIG. 25 show a second embodiment of the present invention.

Components or portions corresponding to those of the first embodiment are designated by like reference characters and only shown in the drawings, and the detailed description of them is omitted.

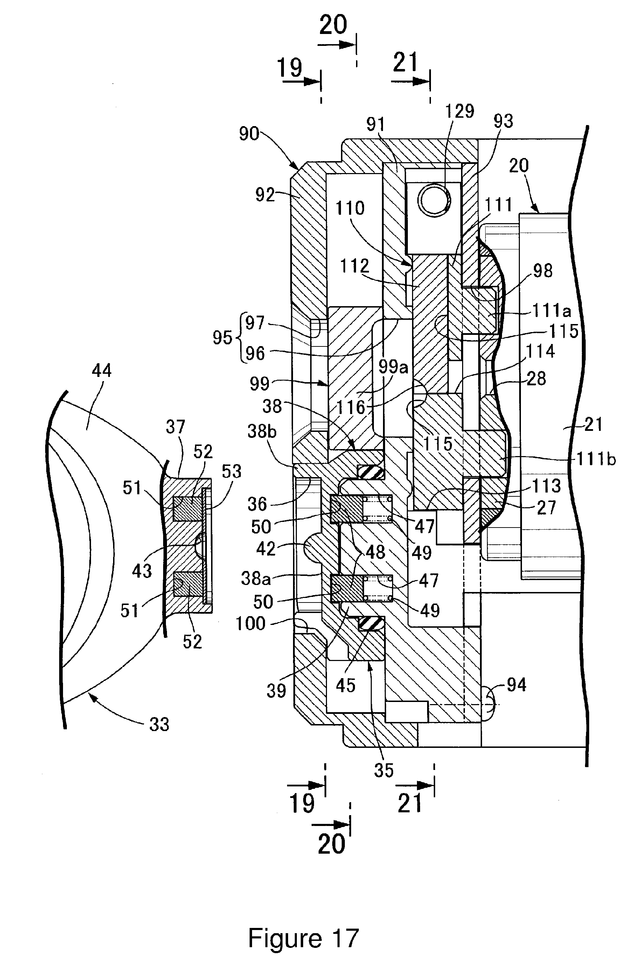

First, in FIG. 16 and FIG. 17, a front end part of a cylinder body 21 of a cylinder lock 20 for a vehicle, for example, a two-wheeled motor vehicle is covered by a casing 90. The casing 90 includes a case member 91, made of a non-magnetic material, mounted on the front end part of the cylinder body 21, a cover member 92, made of a non-magnetic material, mounted on the case member 91, and a flat plate-shaped back plate 93 sandwiching the case member 91 between itself and the cover member 92; securing the case member 91, the cover member 92, and the back plate 93 by a plurality of, for example, two, screw members 94 and 94 forms the casing 90, and the casing 90 is fixed to the cylinder body 21.

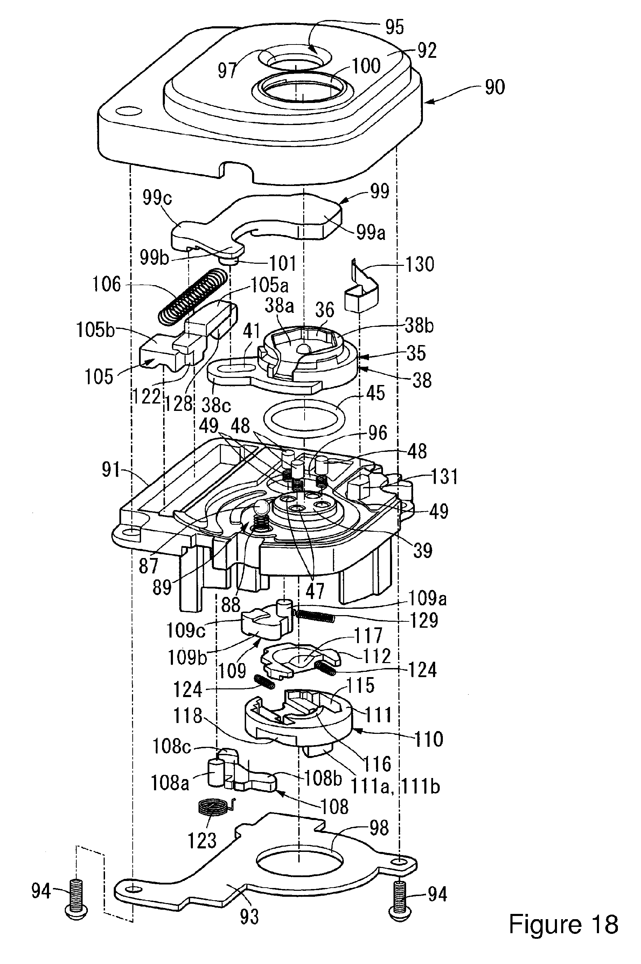

Referring in addition to FIG. 18, the casing 90 is provided with an insertion hole 95 corresponding to a key hole 28 of an inner cylinder 27 of the cylinder lock 20. This insertion hole 95 is formed from circular through holes 96 and 97 coaxially provided in the case member 91 and the cover member 92 respectively, and an outer end part of the through hole 97 of the cover member 92 is formed in a tapered shape so that insertion of the mechanical key 33 (see the first embodiment) is easy. Furthermore, the back plate 93 is provided with an opening 98, which has a larger diameter than those of the through holes 96 and 97 of the case member 91 and the cover member 92, so as to correspond to the through holes 96 and 97.

Housed within the casing 90 between the case member 91 and the cover member 92 is a shutter plate 99, which is capable of moving along a plane perpendicular to the axis of the key hole 28 between a closed position at which the insertion hole 95 and the key hole 28 are closed and an open position at which the insertion hole 95 and the key hole 28 are opened.

Movement of the shutter plate 99 from the closed position to the open position is allowed by fitting a magnet key 37 into a mating recess 36 of a magnet lock 35 disposed in the casing 90; the magnet lock 35 includes a rotor 38, which is formed separately from the shutter plate 99, and the mating recess 36 is formed in the rotor 38.

A circular cross-section support projection 39 is projectingly provided integrally with the case member 91 of the casing 90, the support projection 39 projecting on the cover member 92 side at a position spaced from the insertion hole 95, and a circular opening 100 is provided in the cover member 92 in a portion corresponding to the support projection 39. The rotor 38, which is formed from a non-magnetic material, has the same arrangement as that for the first embodiment; a rotor main portion 38b of the rotor 38 is pivotably supported on the support projection 39 with an O-ring 45 disposed between itself and a base part of the support projection 39, and the outer end of the rotor main portion 38b is disposed so as to face the opening 100.

Rod-shaped permanent magnets 48 are slidably fitted into three sliding recesses 47 selected from a plurality of, for example, four, sliding recesses 47 provided at the extremity of the support projection 39 so that combination of magnetic pole arrangements on a facing wall portion 38a side of the rotor 38 is appropriate, and the permanent magnets 48 are spring-urged by springs 49 toward the side on which they project from the extremity of the support projection 39. In a state in which parts of the permanent magnets 48 engage with three of the four engagement recesses 50 provided in the facing wall portion 38a of the rotor 38, pivoting of the rotor 38 is prevented.

The magnet key 37 is attached to a grip part 44 provided on the mechanical key 33, rod-shaped permanent magnets 52 are housed in three of four housing recesses 51 provided in the grip part 44 so as to open toward the facing wall portion 38a of the rotor 38, such that the same magnetic pole as the magnetic pole, on the facing wall portion 38a side, of the permanent magnets 48 on the support projection 39 side is disposed on the facing wall portion 38a side, and an open end of each of the housing recesses 51 is closed by a closing plate 53, which is fixed to the magnet key 37 and is made of a non-magnetic material.

When a legitimate magnet key 37 is fitted into the mating recess 36, due to repulsion between like magnetic poles the permanent magnets 48 on the support projection 39 side are pushed into the sliding recesses 47 against the spring force of the springs 49 so that they separate from the engagement recesses 52, thereby allowing the rotor 38 to pivot.

Moreover, as shown in FIG. 18, provided between the case member 91 and the rotor 38 is a click mechanism 89 having a click ball 87 and a click spring 88, the click ball 87 resiliently engaging selectively with click recesses (not illustrated) provided at two positions spaced in the peripheral direction on the rotor 38 side, the click spring 88 being provided in a compressed state between the ball 87 and the case member 91 so as to exhibit a spring force urging the click ball 87 toward the rotor 38 side, and the click mechanism 89 giving a click feel during pivoting of the rotor 38 when unlocking the magnet lock 35.

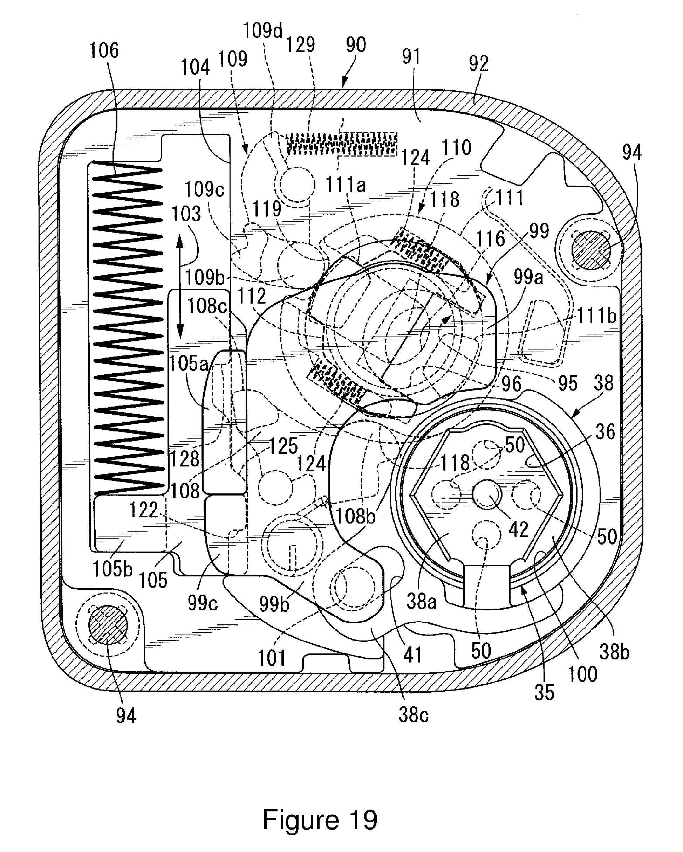

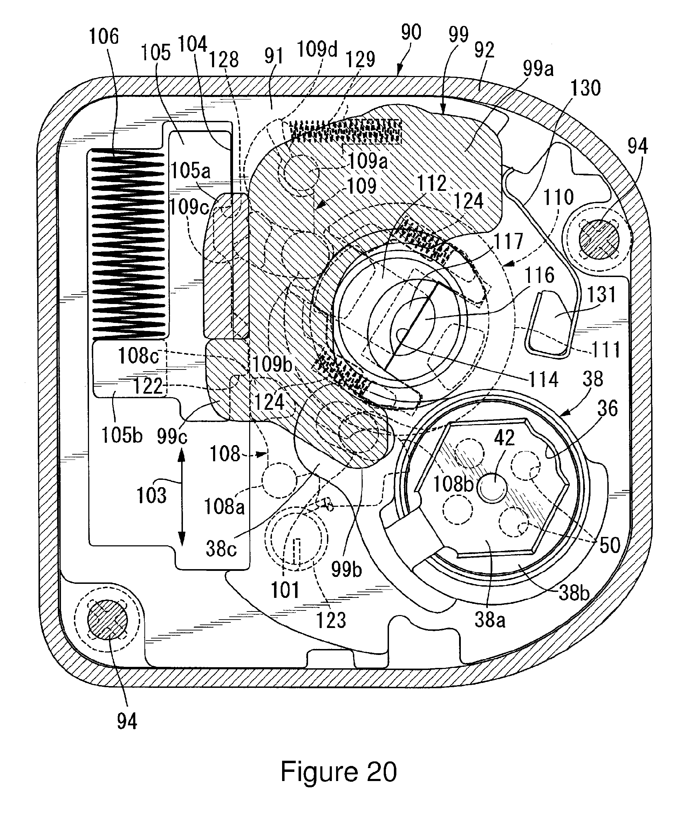

Referring in addition to FIG. 19 and FIG. 20, the shutter plate 99 integrally has a flat plate-shaped shutter main portion 99a that can close the insertion hole 95, a connecting arm portion 99b extending from the shutter main portion 99a toward a connecting arm portion 38c of the rotor 38, and a connecting projection 99c provided so as to be connected to an end part, on the connecting arm portion 38c side, of the connecting arm portion 99b and projecting toward the side opposite the insertion hole 95 and the opening 100, the connecting arm portion 99b being integrally and projectingly provided with a connecting pin 101 inserted into a connection hole 41 of the connecting arm portion 38c of the rotor 38.

The shutter plate 99 can move in a movement direction shown by arrow 103 along a plane perpendicular to the axis of the key hole 28 between the closed position at which the insertion hole 95 is closed as shown in FIG. 19 and the open position at which the insertion hole 95 is opened as shown in FIG. 20, and a guide groove 104 extending lengthwise along the movement direction 103 is provided in the case member 91. A coupling member 105 moving in association with the shutter plate 99 is fitted into the guide groove 104 so that it can slide in the movement direction 103.

An engagement projection 105a and a spring receiving portion 105b are projectingly provided on the coupling member 105; the engagement projection 105a abuts against and engages with the connecting projection 99c of the shutter plate 99 from the open position side, and the spring receiving portion 105b has a return spring 106 disposed between itself and the case member 91 of the casing 90, with the return spring 106 as resilient means being housed within the guide groove 104 and the coupling member 105 abutting against and engaging with the shutter plate 99 from the open position side so that the shutter plate 99 is urged toward the closed position side by the resilient urging force of the return spring 106.

In the cover member 92 of the casing 90, LOCK, OFF, and ON positions are displayed in an area around the insertion hole 95, that is, the through hole 97 as shown in FIG. 16, and aligning the longitudinal direction in a cross-section of the key hole 28, which has a rectangular cross-sectional shape, with each of the LOCK, OFF, and ON positions enables the inner cylinder 27 of the cylinder lock 20 to be positioned at the locked position, the OFF position, and the ON position. At the locked position, handlebars, which are not illustrated, are in a locked state, and the cylinder lock 20 is provided with a mechanism (not illustrated) that requires the mechanical key 33 to be pushed when pivoting the inner cylinder 27 between the locked position and the OFF position. Furthermore, both when the inner cylinder 27 is at the locked position and when the inner cylinder 27 is at the OFF position, inserting the mechanical key 33 into the key hole 28 and withdrawing it therefrom are possible.

The return spring 106, first and second engagement members 108 and 109 capable of engaging with the coupling member 105 in a state in which the shutter plate 99 is at the open position and retaining the shutter plate 99 at the open position, and cam means 110 for moving the first and second engagement members 108 and 109 are housed within the casing 90 so that they can move along a plane perpendicular to the axis of the key hole 28.

The cam means 110 is formed from a disk-shaped cam plate 111 pivotably retained on the case member 91, and a push plate 112 fitted into the cam plate 111 so that it can slide in a radial direction of the cam plate 111, and the cam plate 111 is connected to the inner cylinder 27 of the cylinder lock 20 so that it cannot pivot relative thereto.

A circular support recess 113 (see FIG. 17), which is coaxial with the insertion hole 95, is provided in a face of the case member 91 on the cylinder lock 20 side, and the cam plate 111 is pivotably fitted into the support recess 113. On the other hand, a circular opening 98, which faces part of the cam plate 111 fitted into the support recess 113, is provided in the back plate 93 secured to the case member 91 so as to be coaxial with the insertion hole 95, the back plate 93 is secured to the case member 91 so as to sandwich an outer peripheral part of the cam plate 111 between itself and the case member 91, and a plurality of, for example, two, connecting shaft portions 111 a and 111 b provided integrally with the cam plate 111 and running through the opening 98 are fitted into the inner cylinder 27 of the cylinder lock 20, the cam plate 111 thereby being connected to the inner cylinder 27 so that it cannot pivot relative thereto.

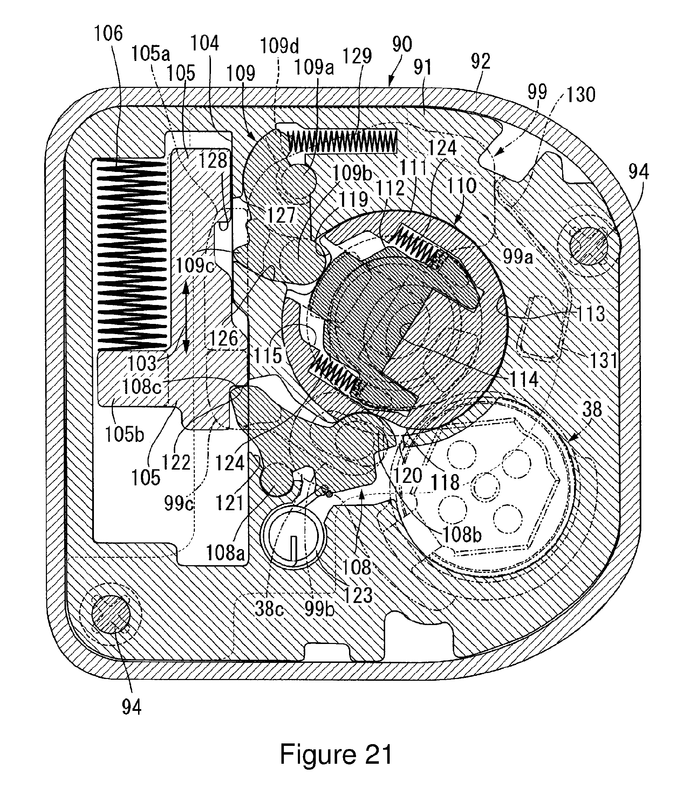

Referring in addition to FIG. 21, a through hole 114 is provided in a middle part of the cam plate 111 so as to be present between the insertion hole 95 and the key hole 28, the through hole 114 having a rectangular cross-sectional shape so as to correspond to the key hole 28 of the cylinder lock 20. Furthermore, a mating recess 115 is provided in a face, of the cam plate 111, facing the case member 91 side so as to extend in a radial direction of the cam plate 111, the mating recess 115 having its inner end opening in the through hole 114 and its outer end opening on the outer periphery of the cam plate 111, and the push plate 112 is slidably fitted into the mating recess 115.

An inner end part of the push plate 112 is formed so that it can block the through hole 114, and the outer end of the push plate 112 is formed as an arc shape having the same curvature as that of the outer periphery of the cam plate 111. When the inner end part of the push plate 112 is at a position at which the through hole 114 is blocked, the outer end of the push plate 112 is at a position further inward than the outer periphery of the cam plate 111, and when the inner end part of the cam plate 112 is at a position at which the through hole 114 is opened, the outer end of the push plate 112 is at a position at which the outer end is flush with the outer periphery of the cam plate 111. Moreover, provided between the cam plate 111 and opposite sides of the push plate 112 are springs 124 and 124 urging the push plate 112 toward the side on which the through hole 114 is blocked.

Provided on a face of the cam plate 111 facing the insertion hole 95 side on the side opposite to the push plate 112 relative to the through hole 114 is an arc-shaped guide face 116 that guides the tip of the mechanical key 33 inserted into the insertion hole 95 to the through hole 114 side, and provided in a middle part in the width direction of the inner end part of the push plate 112 is a pressure-receiving face 117, against which the tip of the mechanical key 33 guided by the guide face 116 abuts. This pressure-receiving face 117 is formed such that, by virtue of the tip of the mechanical key 33 pushed into the insertion hole 95 in order to be inserted into the key hole 28 abutting against the pressure-receiving face 117, a force toward the radially outward direction of the cam plate 111 acts on the push plate 112 in order to open the through hole 114 against the spring force of the spring 124, and the mechanical key 33 inserted into the insertion hole 95 and abutting against the pressure-receiving face 117 is inserted into the key hole 28 via the through hole 114 so as to push away the push plate 112 in the radially outward direction of the cam plate 111.

Furthermore, a pair of recesses 118 and 119 are provided in the outer periphery of the cam plate 111 at an interval in the peripheral direction, one of the recesses 118 is formed in substantially half, on the back plate 93 side, of the thickness along the axial direction of the cam plate 111. The other recess 119 is provided in the outer periphery of the cam plate 111 in a portion that the outer end of the push plate 112 can face, and is formed over the entire thickness in the axial direction of the cam plate 111.

The first engagement member 108 integrally has a substantially circular pivot support portion 108a fitted into and swingably supported on the case member 91 side, a mating portion 108b extending from the pivot support portion 108a to the cam plate 111 side, and an engagement portion 108c extending from the pivot support portion 108a to the coupling member 105 side, and is disposed between the back plate 93 and the case member 91 of the casing 90.

The tip of the mating portion 108b can abut against the outer periphery of the cam plate 111, and the case member 91 is provided with a cutout 120 by cutting out part of a side wall of the support recess 113, the cutout 120 allowing part of the outer periphery of the cam plate 111 to face the first engagement member 108 side. When the cam plate 111, together with the inner cylinder 27 of the cylinder lock 20, is at the locked position the tip of the mating portion 108b can be fitted into the recess 118 of the cam plate 111, and when the cam plate 111, together with the inner cylinder 27, is at the OFF position and the ON position, the tip of the mating portion 108b is in sliding contact with the outer periphery of the cam plate 111. Moreover, since the recess 118 is formed in substantially half of the thickness along the axial direction of the cam plate 111, the mating portion 108b is also formed so as to have a thickness of substantially half of the thickness along the axial direction of the cam plate 111.

Furthermore, the case member 91 is provided with a window 121 by cutting out part of a side wall of the guide groove 104, the window 121 allowing part of the coupling member 105 to face the first engagement member 108 side, and the coupling member 105 is provided with a step-shaped first latching part 122, the first latching part 122 allowing the tip of the engagement portion 108c projecting from the window 121 to engage with the first latching part 122 from the closed position side when the shutter plate 99 is at the open position.

A coil-shaped torsion spring 123 is provided in a compressed state between the first engagement member 108 and the case member 91, and the first engagement member 108 is urged by the spring force of the torsion spring 123 to the side on which the mating portion 108b is made to abut against the outer periphery of the cam plate 111 and the engagement portion 108c is made to abut against the first latching part 122.

Moreover, the first engagement member 108 can engage with the first latching part 122 of the coupling member 105 in a state in which the mating portion 108b is fitted into the recess 118 of the cam plate 111, and in a state in which the mating portion 108b abuts against the outer periphery of the cam plate 111 at a position other than the recess 118, the tip of the engagement portion 108c is at a position facing the window 121 and the tip of the engagement portion 108c does not engage with the first latching part 122.

Furthermore, the recess 118 is formed such that, in a state in which the mating portion 108b is fitted into the recess 118, when the cam plate 111, together with the inner cylinder 27, pivots from the locked position toward the ON position side, the first engagement member 108 is pivoted in a clockwise direction in FIG. 21 against the spring force of the torsion spring 123 so as to allow the mating portion 108b to ride over the outer periphery of the cam plate 111 and allow the tip of the engagement portion 108c to move back from the guide groove 104 toward the window 121 side.

When the shutter plate 99 is at the closed position as shown in FIG. 19, the mating portion 108b of the first engagement member 108 is fitted into the recess 118, and the engagement portion 108c is close to or abuts against a side face of the coupling member 105. An inclined face 125 is formed on a section of the side face, on the first engagement member 108 side, of the engagement projection 105a of the coupling member 105 from the position where the engagement portion 108c is close to or abuts against to the first latching part 122, the inclined face 125 abutting against the engagement portion 108c and first pivoting the first engagement member 108 in a clockwise direction in FIG. 19 so as to temporarily separate the mating portion 108b from the recess 118 when the shutter plate 99, that is, the coupling member 105, moves upward in FIG. 19 in order to move from the closed position to the open position; after the engagement portion 108c moves past the inclined face 125, the first engagement member 108 pivots so as to fit the mating portion 108b into the recess 118, and in this state the engagement portion 108c abuts against and engages with the first latching part 122.

The second engagement member 109 integrally has a substantially circular pivot support portion 109a fitted into and swingably supported on the case member 91, a mating portion 109b extending from the pivot support portion 109a to the cam plate 111 side, an engagement portion 109c extending from the pivot support portion 109a to the guide groove 104 side, and a spring receiving portion 109d extending from the pivot support portion 109a to the side opposite the mating portion 109b, and is disposed between the case member 91 and the back plate 93 of the casing 90.

The tip of the mating portion 109b can abut against the outer periphery of the cam plate 111, and the case member 91 is provided with a cutout 126 by cutting out a part of a side wall of the support recess 113, the cutout 126 allowing part of the outer periphery of the cam plate 111 to face the second engagement member 109 side. When the cam plate 111, together with the inner cylinder 27 of the cylinder lock 20, is at the locked position, the tip of the mating portion 109b can be fitted into the recess 119 of the cam plate 111. The recess 119 is formed over the whole axial thickness of the cam plate 111, the mating portion 109b is formed so as to have a thickness equal to or larger than the axial thickness of the cam plate 111 in order for it to be fitted into the recess 119, and the mating portion 1 09b does not fit into the recess 118.

Furthermore, the case member 91 is provided with a window 127 by cutting out part of the side wall of the guide groove 104, the window 127 allowing part of the coupling member 105, which slides together with the shutter plate 99, to face the second engagement member 109 side, and the coupling member 105 is provided with a step-shaped second latching part 128, the second latching part 128 allowing the tip of the engagement portion 109c projecting from the window 127 to engage with the coupling member 105 from the closed position side when the shutter plate 99 is at the open position.

A coil spring 129 is provided between the second engagement member 109 and the case member 91, and the second engagement member 109 is urged by the spring force of the coil spring 129 to the side on which the mating portion 109b is made to abut against the outer periphery of the cam plate 111.

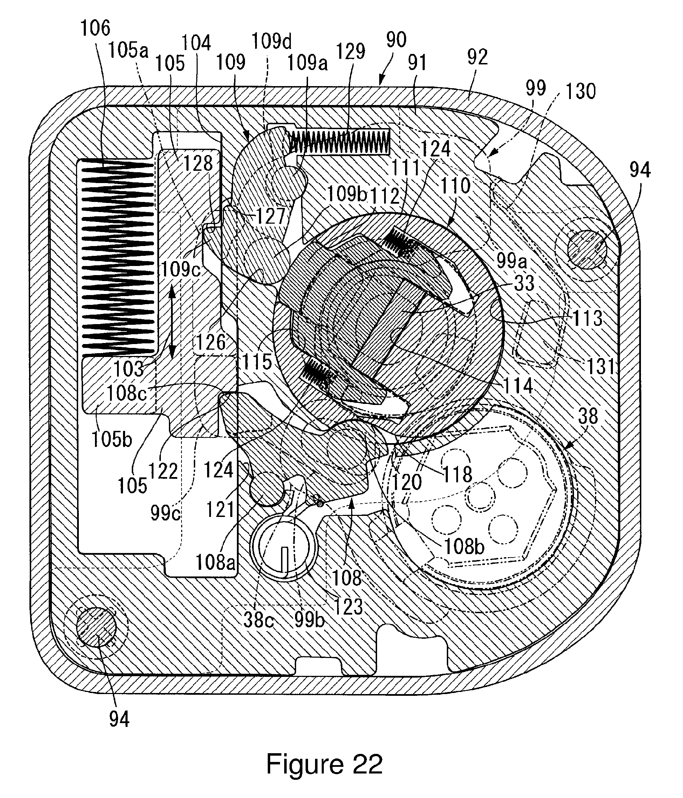

Moreover, in a state in which the tip of the mating portion 109b of the second engagement member 109 is fitted into the recess 119 of the cam plate 111, the tip of the mating portion 109b abuts against an outer end part of the push plate 112, which is closing the through hole 114 of the cam plate 111, and when the push plate 112 is pushed outwardly in the radial direction of the cam plate 111 by the mechanical key 33 being inserted into the through hole 114, as shown in FIG. 22, the second engagement member 109 pivots in a clockwise direction in FIG. 22 against the spring force of the coil spring 129, and the tip of the engagement portion 109c projects into the guide groove 104 through the window 127 so as to engage with the second latching part 128 of the coupling member 105.

The operating condition of each component during a process in which, in a state in which the inner cylinder 27 of the cylinder lock 20 is at the locked position and the shutter plate 99 is at the closed position, the magnet lock 35 is unlocked to thus move the shutter plate 99 to the open position, and after the mechanical key 33 is inserted into the key hole 28 and pivoted, the mechanical key 33 is withdrawn is now explained; in a state in which the shutter plate 99 is being moved from the closed position to the open position after the magnet lock 35 is unlocked, as shown in FIG. 20, sliding of the coupling member 105 together with the shutter plate 99 makes the first engagement member 108 pivot against the spring force of the torsion spring 123 so as to make the mating portion 108b separate from the recess 118 of the cam plate 111.

When the shutter plate 99 reaches the open position, as shown in FIG. 20, the insertion hole 95 is opened, as shown in FIG. 21, the engagement portion 108c of the first engagement member 108 pivotingly urged by the torsion spring 123 engages with the first latching part 122 of the coupling member 105 from the closed position side, and in spite of the action of the spring force of the return spring 106, the shutter plate 99 is retained at the open position. Moreover, a mating projection 131 is projectingly provided on the case member 91, one end part of a leaf spring 130 being fitted onto and retained by the mating projection 131, and the other end part of the leaf spring 130 abutting against a side face, on the side opposite to the coupling member 105, of the shutter main portion 99a of the shutter plate 99 at the open position, thus preventing the shutter plate 99 from rattling at the open position by pressing the shutter plate toward the coupling member 105 side.

Subsequent, the mechanical key 33 is inserted into the insertion hole 95; when as shown in FIG. 22 the mechanical key 33 is inserted into the through hole 114 in the cam means 110, the push plate 112 of the cam means 110 is pushed outward in the radial direction of the cam plate 111, the second engagement member 109 that makes the mating portion 109b fit into the recess 119 pivots in the clockwise direction in FIG. 22, the mating portion 109b separates from the recess 119 and the engagement portion 109c engages with the second latching part 128 of the coupling member 105 from the closed position side, and the shutter plate 99 is retained at the open position by the second engagement member 109 also.

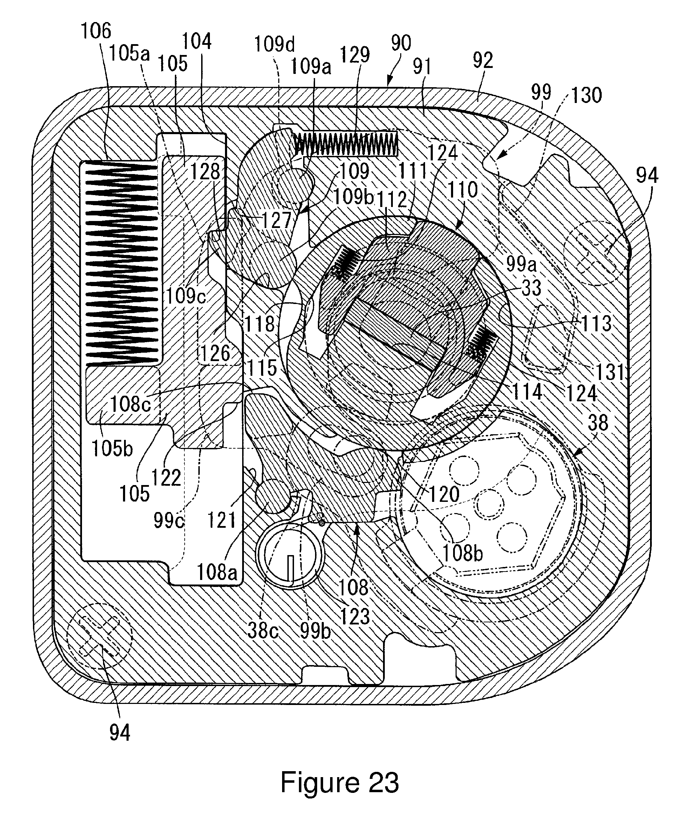

As shown in FIG. 23, when the mechanical key 33 inserted into the key hole 28 is pivoted to the OFF position while pushing it the first engagement member 108 is pivoted in the clockwise direction in FIG. 23 by the cam plate 111, which pivots to the OFF position together with the inner cylinder 27; as shown in FIG. 23, the mating portion 108b rides over the outer periphery of the cam plate 111, and the tip of the engagement portion 108c, which is abutting against and engaging with the first latching part 122, pushes up the coupling member 105 against the spring force of the return spring 106 and moves back to the window 121 side. Due to the tip of the engagement portion 108c moving back to the window 121 side and releasing engagement with the first latching part 122, the coupling member 105 returns so that the engagement portion 109c of the second engagement member 109 engages with the second latching part 128, and in this state the shutter plate 99 is retained at the open position by the second engagement member 109.

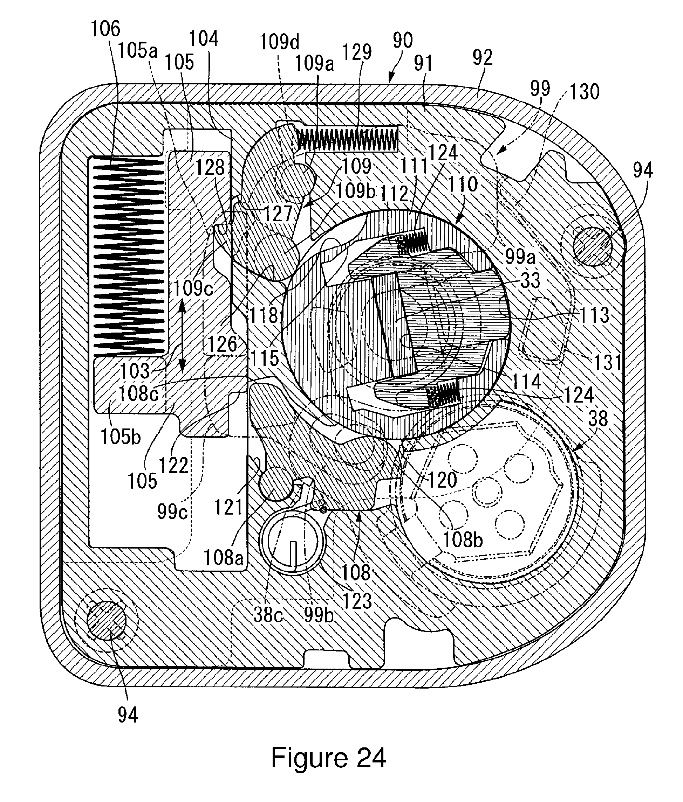

Pivoting the cam plate 111, together with the inner cylinder 27, to the ON position by means of the mechanical key 33 inserted into the key hole 28 puts the mating portion 108b of the first engagement member 108 into a state in which it abuts against the outer periphery of the cam plate 111 as shown in FIG. 24, and the second engagement member 109 attains a state in which the mating portion 109b abuts against the outer periphery of the cam plate 111 while the engagement portion 109c remains engaged with the second latching part 128.

When the cam plate 111, together with the inner cylinder 27, is returned to the locked position by means of the mechanical key 33 inserted into the key hole 28, and the mechanical key 33 is withdrawn, it returns to the state as shown in FIG. 19, the recess 119 matches a position corresponding to the mating portion 109b of the second engagement member 109, the second engagement member 109 is fitted into the recess 119 while the push plate 112 is pushed inward in the radial direction of the cam plate 111 by the spring force of the coil spring 129, the engagement of the engagement portion 109c of the second engagement member 109 with the second latching part 128 is released, and the shutter plate 99 is automatically returned to the closed position by the spring force of the return spring 106. In this process, the first engagement member 108 is at a position at which the mating portion 108b is fitted into the recess 118, and in response to the shutter plate 99 and the coupling member 105 returning to the closed position, it pivots so that the mating portion 108b is fitted into the recess 118 by the spring force of the torsion spring 123, and the engagement portion 108c is made to abut against the side face of the coupling member 105.

In this way, the cam means 110 makes the first engagement member 108 engage with the coupling member 105 from the closed position side in response to movement of the shutter plate 99 from the closed position to the open position, makes the second engagement member 109 engage with the coupling member 105 from the closed position side in response to insertion of the mechanical key 33 into the key hole 28, releases the engagement of the first engagement member 108 with the coupling member 105 in response to pivoting to the ON position by the mechanical key 33 inserted into the key hole 28, and releases the engagement of the second engagement member 109 with the coupling member 105 in response to the mechanical key 33 being withdrawn from the key hole 28 at the locked position.

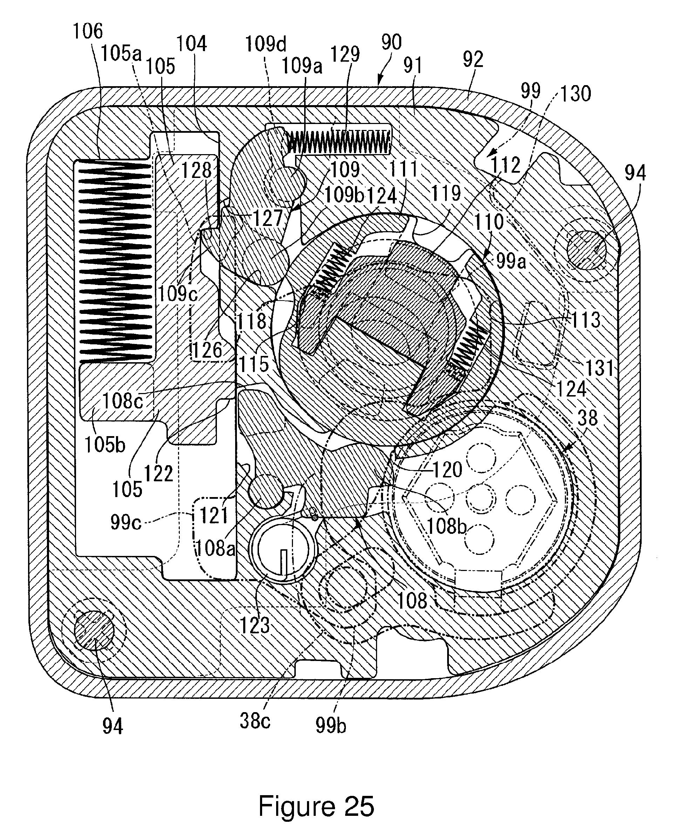

When the cam plate 111, together with the inner cylinder 27, is returned to the OFF position by means of the mechanical key 33 inserted into the key hole 28, and the mechanical key 33 is withdrawn, since the second engagement member 109 engages with the coupling member 105, the shutter plate 99 does not automatically return to the closed position, and the open position of the shutter plate 99 is maintained; in this process, if the shutter plate 99 is pivoted to the closed position by the magnet key 37 of the magnet lock 36, the coupling member 105 urged by the return spring 106 urges the shutter plate 99 toward the closed position side and abuts against and engages with the shutter plate 99 from the open position side, and as shown in FIG. 25, the shutter plate 99 therefore returns to the closed position while leaving the coupling member 105, with which the second engagement member 109 is engaged, as it is.

The operation of the second embodiment is now explained. When the magnet lock 35 is unlocked and the shutter plate 99 is moved from the closed position to the open position, the first engagement member 108 engages, from the closed position side, with the coupling member 105 moving together with the shutter plate 99, and by inserting the mechanical key 33 into the key hole 28 the second engagement member 109 engages with the coupling member 105 from the closed position side; the engagement of the first engagement member 108 with the coupling member 105 is released in response to pivoting to the ON position by the mechanical key 33, but the second engagement member 109 remains engaged with the coupling member 105, and as long as the mechanical key 33 is inserted into the key hole 28 the shutter plate 99 is therefore retained at the open position.

Furthermore, when the mechanical key 33 is withdrawn from the key hole 28 at the locked position, the engagement of the second engagement member 109 with the coupling member 105 is released, and the shutter plate 99 therefore automatically returns from the open position to the closed position by virtue of the resilient force of the return spring 106. That is, in response to withdrawing the mechanical key 33 at the locked position when parked for a long time the shutter plate 99 automatically returns to the closed position, and it is therefore possible to enhance the operability and ensure that closing the shutter plate is not forgotten, thus enhancing the theft resistance. On the other hand, as when parked for a short time, when the mechanical key 33 inserted into the key hole 28 is withdrawn at the OFF position, the engaged state of the second engagement member 109 with the coupling member 105 is maintained, the shutter plate 99 cannot automatically return to the closed position at the OFF position, and if, as when parking for a short time, the necessity of closing the shutter plate 99 is low, the shutter plate 99 is not closed, thus enhancing the operability.

Moreover, since the first and second engagement members 108 and 109, the cam means 110 for moving the first and second engagement members 108 and 109, and the return spring 106 for urging the shutter plate 99 to the closed position side are housed within the casing 90 so that they move along a plane perpendicular to the axis of the key hole 28, it is possible to form the casing 90 so that it is compact in a direction along the axis of the key hole 28, and the length of the mechanical key 33 can accordingly be made short.

As another embodiment of the present invention, an arrangement in which the coupling member 105 used in the second embodiment is omitted, and the first and second engagement members 108 and 109 engage directly with the shutter plate 99 is also possible.

### EMBODIMENT 3

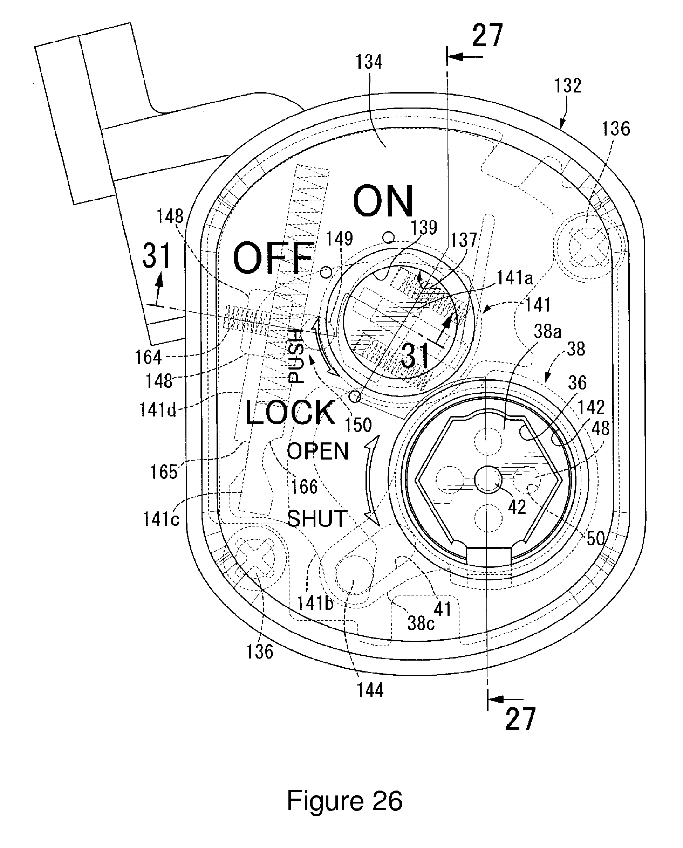

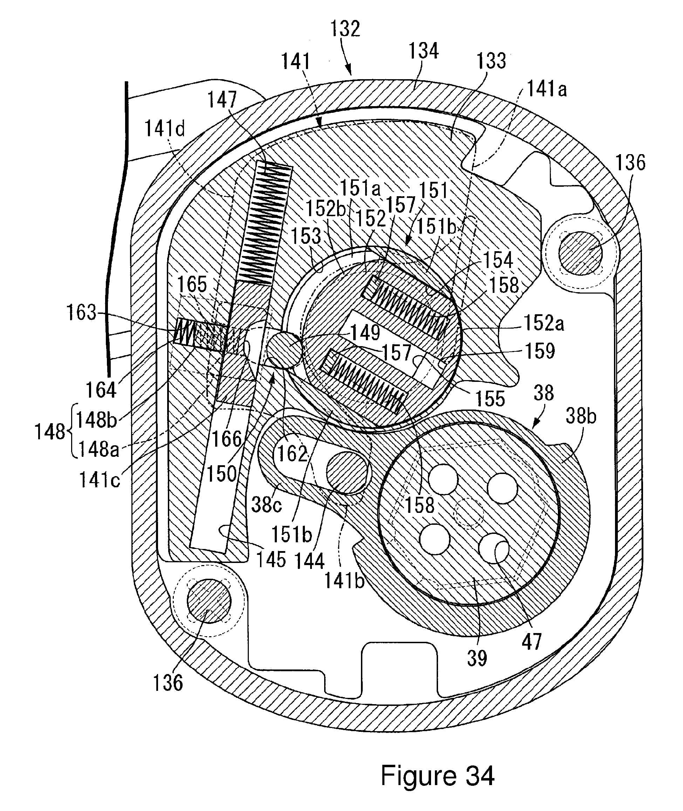

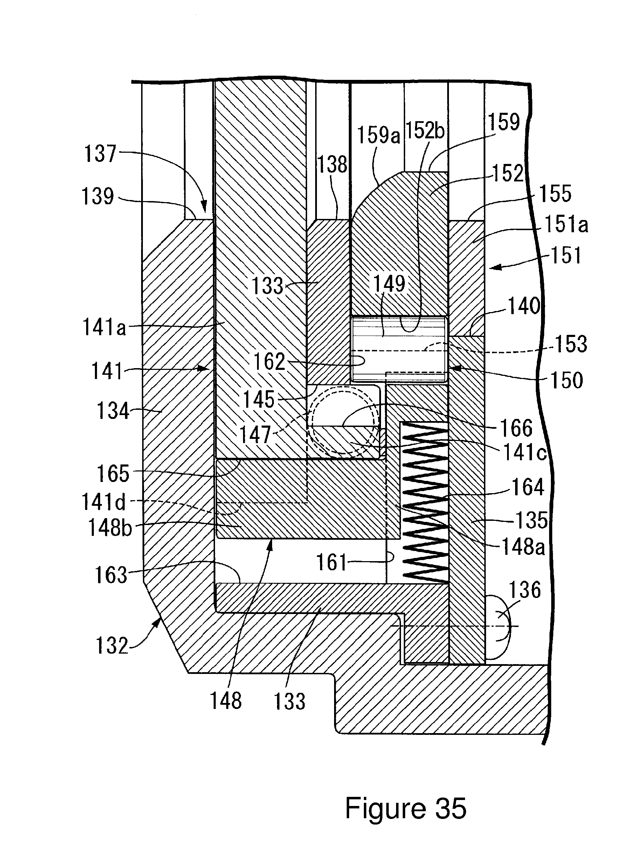

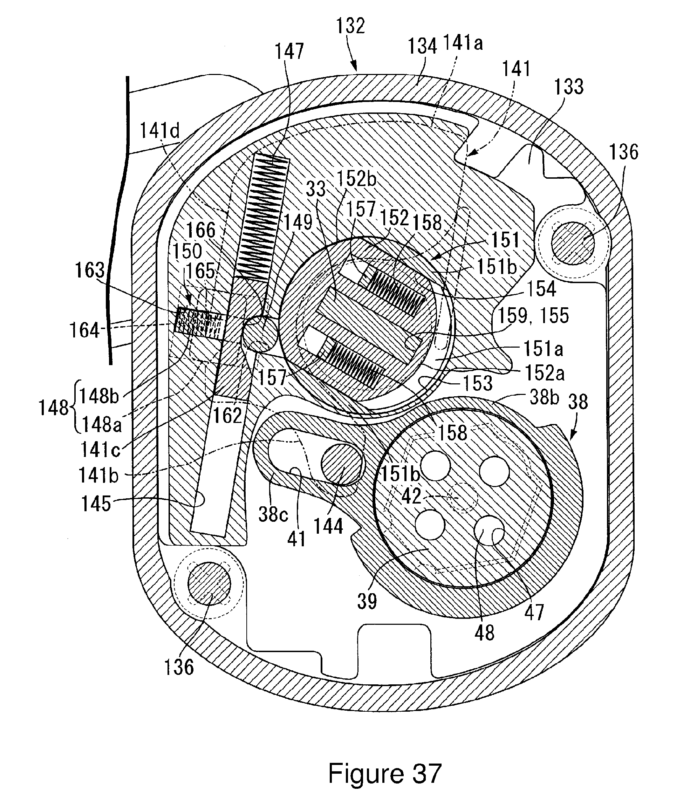

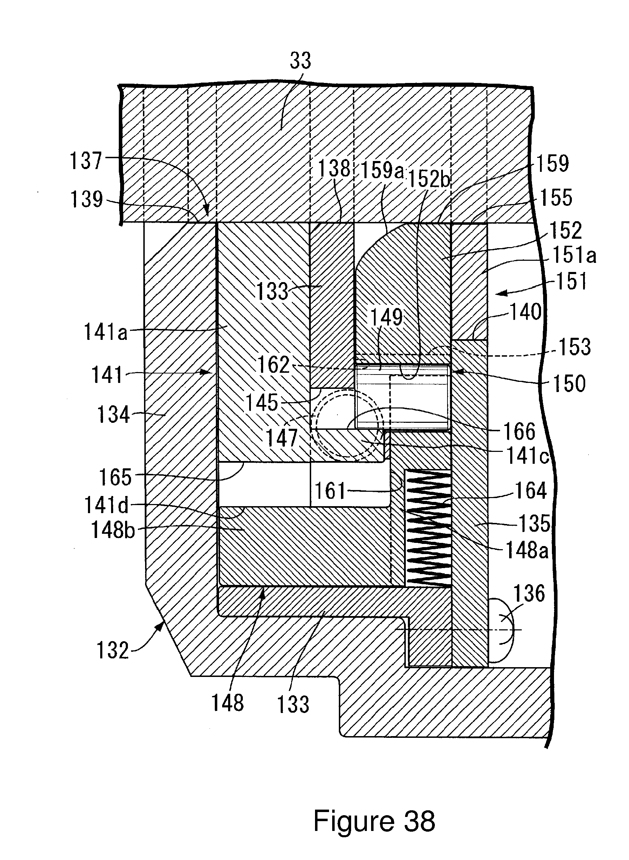

FIG. 26 to FIG. 40 show a third embodiment of the present invention.

Components or portions corresponding to those of the first and second embodiments are designated by like reference characters and only shown in the drawings, and the detailed description of them is omitted.

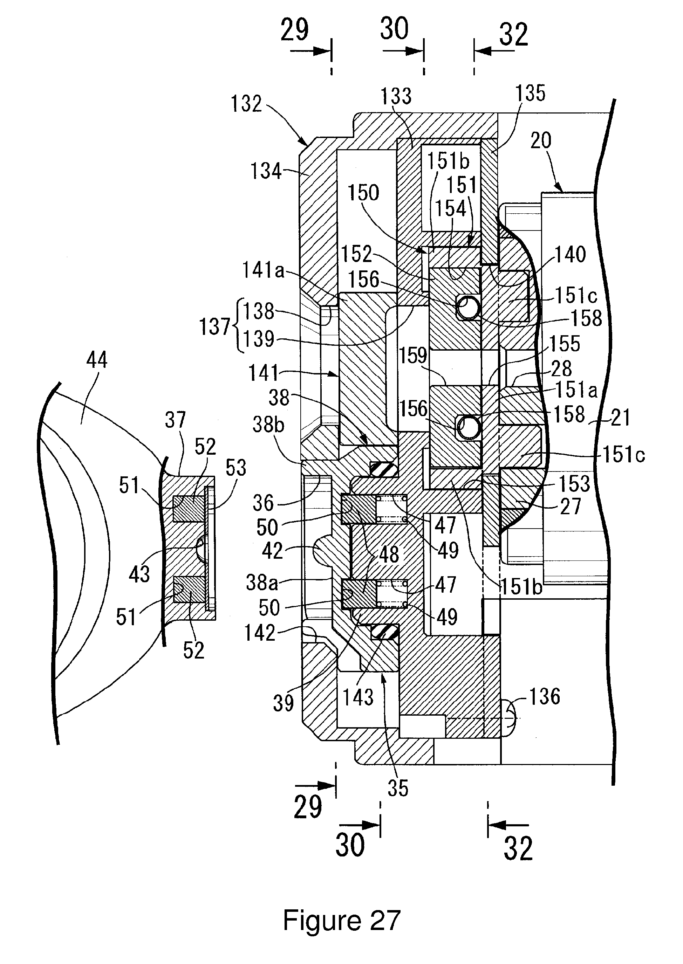

First, in FIG. 26 and FIG. 27, a cylinder body 21 of a cylinder lock 20 for a vehicle, for example, a two-wheeled motor vehicle is provided on a head pipe (not illustrated) of a vehicle body frame, and a front end part of the cylinder body 21 is covered by a casing 132. The casing 132 includes a case member 133, made of a non-magnetic material, mounted on the front end part of the cylinder body 21, a cover member 134, made of a non-magnetic material, mounted on the case member 133, and a flat plate-shaped back plate 135 sandwiching the case member 133 between itself and the cover member 134; securing the case member 133, the cover member 134, and the back plate 135 by a plurality of, for example, two, screw members 136 and 136 forms the casing 132, and the casing 132 is fixed to the cylinder body 21.

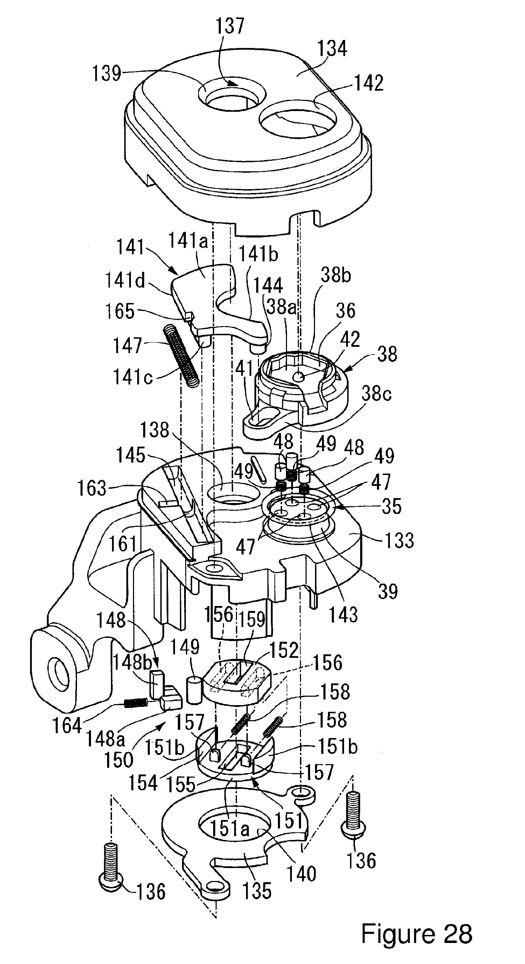

Referring in addition to FIG. 28, the casing 132 is provided with an insertion hole 137 corresponding to a key hole 28 of an inner cylinder 27 of the cylinder lock 20. This insertion hole 137 is formed from circular through holes 138 and 139 coaxially provided in the case member 133 and the cover member 134 respectively, and an outer end part of the through hole 139 provided in the cover member 134 is formed in a tapered shape so that insertion of a mechanical key 33 (see the first embodiment) is easy. Furthermore, the back plate 135 is provided with a mating hole 140, which has a larger diameter than those of the through holes 138 and 139 of the case member 133 and the cover member 134, so as to correspond to the through holes 138 and 139.

Housed within the casing 132 between the case member 133 and the cover member 134 is a shutter plate 141, which is capable of moving along a plane perpendicular to the axis of the key hole 28 between a closed position at which the insertion hole 137 and the key hole 28 are closed and an open position at which the insertion hole 137 and the key hole 28 are opened.

Movement of the shutter plate 141 from the closed position to the open position is allowed by fitting a magnet key 37 into a mating recess 36 of a magnet lock 35 disposed in the casing 132; the magnet lock 35 includes a rotor 38, which is formed separately from the shutter plate 141, and the mating recess 36 is formed in the rotor 38.

A circular cross-section support projection 39 is projectingly provided integrally with the case member 133 of the casing 132, the support projection 39 projecting on the cover member 134 side at a position spaced from the insertion hole 137, and a circular opening 142 is provided in the cover member 134 in a portion corresponding to the support projection 39. The rotor 38, which is formed from a non-magnetic material, has the same arrangement as that for the first and second embodiments; a rotor main portion 38b of the rotor 38 is pivotably supported on a support projection 39 with an O-ring 143 disposed between itself and a base part of the support projection 39, and the outer end of the rotor main portion 38b is disposed so as to face the opening 142.

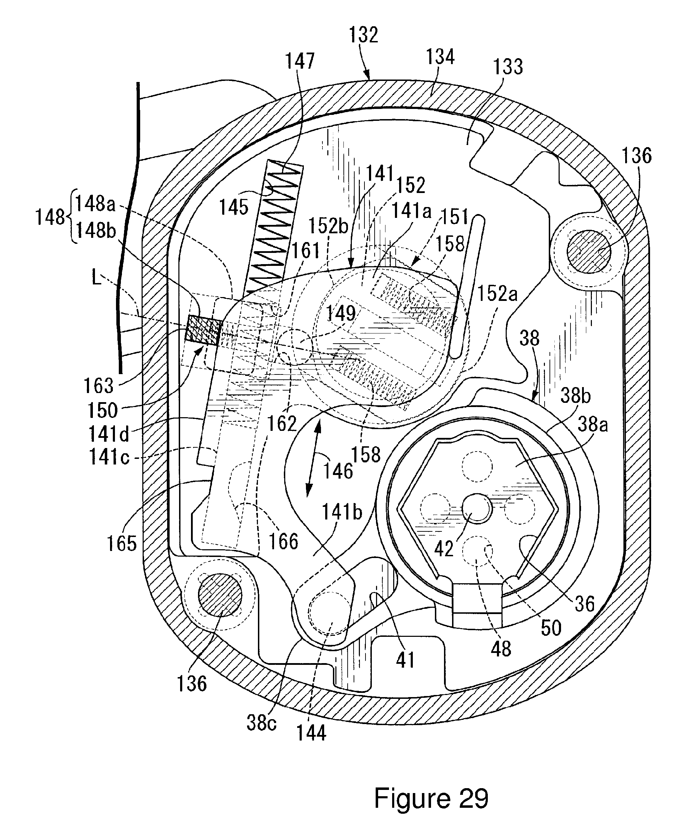

Referring in addition to FIG. 29, the shutter plate 141 integrally has a flat plate-shaped shutter main portion 141 a that can close the insertion hole 137, a connecting arm portion 141 b extending from the shutter main portion 141 a toward a connecting arm portion 38c of the rotor 38, and a guide portion 141 c connected at right angles to the shutter main portion 141 a on the side opposite to the insertion hole 137 and the opening 142; a connecting pin 144 is projectingly provided integrally with the connecting arm portion 141 b, the connecting pin 144 being inserted into a connection hole 41 of the connecting arm portion 38c of the rotor 38.

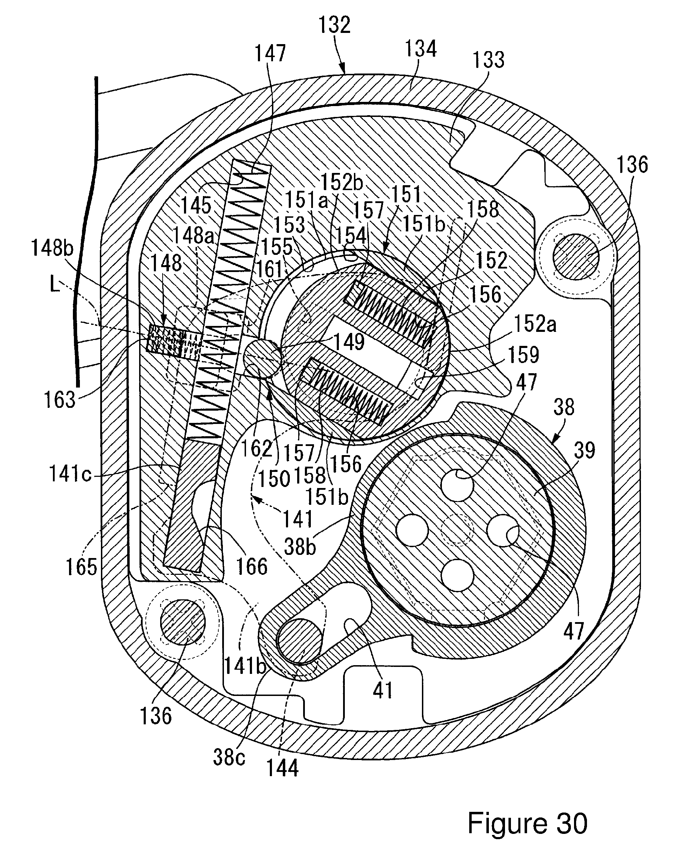

Referring in addition to FIG. 30, the guide portion 141 c is slidably fitted into a guide groove 145 provided in the case member 133, and the guide portion 141 c and the guide groove 145 are formed so as to be long along the direction of movement shown by arrow 146 (see FIG. 29) so that pivoting the rotor 38 by operating the magnet key 37 in a state in which the magnet key 37 is fitted into the mating recess 36 and the magnet lock 35 is unlocked guides the shutter plate 141 so that it moves in the movement direction 146 along a plane perpendicular to the axis of the key hole 28 between the closed position, in which the insertion hole 137 is closed, and the open position, in which the insertion hole 137 is opened. Moreover, a coil-shaped return spring 147, which is resilient means, is provided in a compressed state between the case member 133 and the guide portion 141 c of the shutter plate 141, and the shutter plate 141 is urged toward the closed position side by means of the resilient force exhibited by the return spring 147 housed in the guide groove 145.

The return spring 147, and shutter plate retaining means 150 having first and second engagement members 148 and 149 capable of engaging with the shutter plate 141 at the open position and retaining the shutter plate 141 at the open position, are housed within the casing 132 so that they can move along a plane perpendicular to the axis of the key hole 28.

The shutter plate retaining means 150 includes the first engagement member 148 that engages with the shutter plate 141 in a state in which the mechanical key 33 is not inserted into the key hole 28 when the shutter plate 141 is in the open position, thus retaining the shutter plate 141 at the open position, the second engagement member 149 that engages with the shutter plate 141 in response to the mechanical key 33 being inserted into the key hole 28 when the shutter plate 141 is in the open position, thus retaining the shutter plate 141 at the open position and releasing the engagement of the first engagement member 28 with the shutter plate 141, a pivot member 151 pivotably retained on the casing 132, and a push plate 152 that is slidably retained by the pivot member 151 so as to push the second engagement member 149 to a position at which the second engagement member 149 engages with the shutter plate 141 in response to the mechanical key 33 being inserted into the key hole 28.

The pivot member 151 integrally has a disk portion 151 a pivotably fitted into the mating hole 140 of the back plate 135, and a pair of guide wall portions 151b and 151 b projectingly provided on an outer peripheral part of a front face, on the case member 133 side, of the disk portion 151 a at an interval of 180 degrees from each other, outside faces of the two guide wall portions 151 b projecting slightly further outward than the outer periphery of the disk portion 151 a and being formed in an arc shape along an imaginary circle having a diameter slightly larger than the diameter of the mating hole 140. Moreover, a circular support recess 153 opening on the cylinder lock 20 side is provided in the case member 133 of the casing 132 coaxially with the through hole 138 in the insertion hole 137, and the two guide wall portions 151b are pivotably fitted into the support recess 153. The pivot member 151 is pivotably retained between the back plate 135 and the case member 133 so that portions of the two guide wall portions 151 b projecting from the disk portion 151 a are in sliding contact with and engage with the back plate 135 around the mating hole 140, and a front face of the disk portion 151 a of the pivot member 151 is flush with a front face of the back plate 135.

Furthermore, a pair of connecting shaft portions 151 c and 151 c (see FIG. 27) projecting on the cylinder lock 20 side are integrally provided with the disk portion 151 a of the pivot member 151, and fitting these connecting shaft portions 151 c into the inner cylinder 27 of the cylinder lock 20 connects the pivot member 151 and the inner cylinder 27 so that they cannot pivot relative to each other.

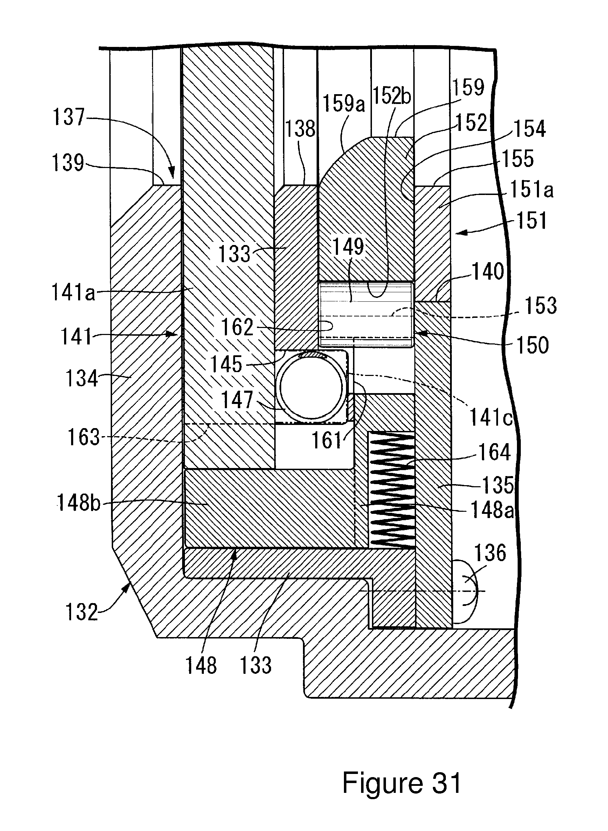

Referring in addition to FIG. 31, a slide groove 154 extending along the direction of one diameter of the pivot member 151 is formed on the pivot member 151 from the front face of the disk portion 151 a and inner side faces of the two guide wall portions 151 b, and the through hole 155 formed so as to have a rectangular cross-section corresponding to the key hole 28 of the cylinder lock 20 is provided in the disk portion 151 a so as to open in a central part of the slide groove 154, the through hole 155 being disposed between the key hole 28 and the insertion hole 137.

The push plate 152 is slidably fitted into the slide groove 154 of the pivot member 151 and sandwiched between the pivot member 151 and the case member 133, this push plate 152 being formed so as to have arc faces 152a and 152b, which have the same radius of curvature as that of the outside faces of the two guide wall portions 151 b of the pivot member 151, at opposite ends in the longitudinal direction of the slide groove 154 and to have a length shorter than that of the slide groove 154. The push plate 152 is fitted into the slide groove 154 so that it can slide between a non-pushed position (position shown in FIG. 30) at which the arc face 152a at one end in the longitudinal direction is flush with the outside face of the two guide wall portions 151 b and the arc face 152b at the other end in the longitudinal direction is positioned further inward than an outer peripheral face of the disk portion 151 a and a pushed position at which the arc face 152b at the other end in the longitudinal direction is flush with the outside face of the guide wall portions 151 b of the pivot member 151 and the arc face 152a at the one end in the longitudinal direction is positioned further inward than the outer peripheral face of the disk portion 151 a.

Moreover, a pair of housing grooves 156 and 156 extending lengthwise along the longitudinal direction of the slide groove 154 and disposed on opposite sides of the through hole 155 are provided in the push plate 152 so as to open toward the disk portion 151 a of the pivot member 151. Projections 157 and 157 projectingly provided integrally with the disk portion 151 a of the pivot member 151 project into these housing grooves 156 and 156, coil springs 158 and 158 provided in a compressed state between one end of the housing grooves 156 and the projection 157 are housed in the housing grooves 156 and 156, and the push plate 152 is urged toward the non-pushed position side by means of the spring force exhibited by the two coil springs 158.

A through hole 159 overlapping the through hole 155 of the pivot member 151 at the pushed position is provided in the push plate 152, and this through hole 159 is provided in the push plate 152 at a position at which part of the through hole 155 of the pivot member 151 is blocked by the push plate 152 when the push plate 152 is at the non-pushed position. Moreover, an arc-shaped guide face 159a is formed in a portion of the through hole 159 on the insertion hole 137 side, the guide face 159a making the tip of the mechanical key 33 inserted into the insertion hole 137 when the push plate 152 is at the non-pushed position abut against the guide face 159a and guiding the mechanical key 33 toward the through hole 155 side; due to the tip of the mechanical key 33 pushed into the insertion hole 137 so as to be inserted into the key hole 28 abutting against the guide face 159a, a force toward the pushed position side in order to open the through hole 155 acts on the push plate 152, and the mechanical key 33 inserted into the insertion hole 137 and abutting against the guide face 159a is inserted into the key hole 28 via the through hole 159 from the through hole 155 so as to push away the push plate 152 to the pushed position side against the spring force of the coil springs 158.

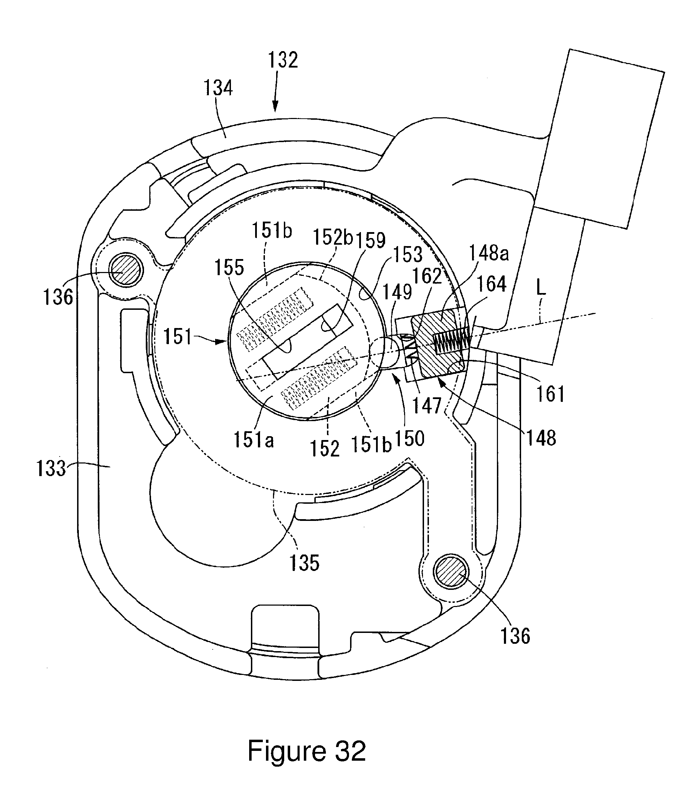

Referring in addition to FIG. 32, the first and second engagement members 148 and 149 are fitted into the case member 133 so that they can move along a straight line L set so as to transect the guide groove 145 at right angles, and transect a position offset from the center of the pivot member 151 by obliquely crossing the sliding direction of the push plate 152. Moreover, the straight line L is set so as to pass on one side in the peripheral direction of the arc face 152b on the other end side in the longitudinal direction of the push plate 152 when the pivot member 151 and the inner cylinder 27 of the cylinder lock 20 are at the locked position, and so as to pass on the other side in the peripheral direction of the arc face 152b on the other end side in the longitudinal direction of the push plate 152 when the pivot member 151 and the inner cylinder 27 of the cylinder lock 20 are at the OFF position.

A first guide recess 161 and a second guide recess 162 are provided along the straight line L in a face, facing the back plate 135 side, of the case member 133 of the casing 132, the first guide recess 161 having its outer end along the straight line L closed and having its inner end positioned further inward than the guide groove 145, and the second guide recess 162 having its outer end along the straight line L positioned at a substantially central position in the width direction of the guide groove 145, having its inner end opening on an inner face of the support recess 153, and having a width smaller than that of the first guide recess 161. The depth of the first guide recess 161 is set so that it does not transect the guide groove 145 provided in the case member 133, the depth of the second guide recess 162 transecting part of the guide groove 145 is set so as to be the same as that of the support recess 153, and open ends of the first and second guide recesses 161 and 162 are closed by the back plate 135.

Furthermore, the case member 133 is provided with a guide hole 163 that follows the straight line L while having a width smaller than that of the first guide recess 161, the guide hole 163 extending between a face on the outer end side of the first guide recess 161 and a face, on the side opposite to the back plate 135, of the case member 133, the outer end along the straight line L of the guide hole 163 is set so as to be the same as the outer end of the first guide recess 161, and the inner end along the straight line L of the guide hole 163 opens on a side face of the guide groove 145.

The first engagement member 148 is formed from a block-shaped sliding portion 148a slidably fitted into the first guide recess 161, and a rectangular column-shaped engagement portion 148b connected integrally to the sliding portion 148a and slidably fitted into the guide hole 163, and a coil spring 164 urging the first engagement member 148 to the side on which it is in proximity to the pivot member 151 is provided in a compressed state between the sliding portion 148a and the case member 133. Furthermore, the second engagement member 149 is formed in a short cylindrical shape and is slidably fitted into the second guide recess 162.

The shutter main portion 141 a of the shutter plate 141 has a sliding contact face 141 d positioned on the side opposite to the insertion hole 137 relative to the guide groove 145 and extending along the movement direction 146, and a first latching recess 165 is formed in the sliding contact face 141d, the first latching recess 165 making the engagement portion 148b of the first engagement member 148 engage therewith when the shutter plate 141 moves to the open position. Furthermore, a second latching recess 166 is formed in the guide portion 141 c of the shutter plate 141, the second latching recess 166 making the second engagement member 149 engage therewith when the shutter plate 141 moves to the open position, and when the second engagement member 149 engages with the second latching recess 166, the second engagement member 149 abuts against the sliding portion 148a of the first engagement member 148, the first engagement member 148 is thereby pushed against the spring force of the coil spring 164 to a position at which the engagement portion 148b is separated from the first latching recess 165, and the engagement of the first engagement member 148 with the shutter plate 141 is released. Moreover, the second latching recess 166 is formed so that, when the second engagement member 149 engages with the second latching recess 166, the shutter plate 141 is moved slightly toward the closed position side by the spring force of the return spring 147 to a position at which the first latching recess 165 is displaced from the engagement portion 148b of the first engagement member 148, and when the engagement of the second engagement member 149 with the second latching recess 166 is released and the shutter plate 141 moves to the closed position side, the engagement portion 148b only comes into sliding contact with the sliding contact face 141d of the shutter plate 141 and does not engage with the first latching recess 165. Furthermore, the second latching recess 166 is formed so that, when a force acting on the second engagement member 149 to the side on which it engages with the second latching recess 166 is released, the second engagement member 149 is pushed away from the second latching recess 165 by the spring force of the return spring 147.

When the shutter plate 141 is at the closed position as shown in FIG. 29 and FIG. 30, the engagement portion 148b of the first engagement member 148 abuts against the sliding contact face 141d of the shutter plate 141, the second engagement member 149 is not in contact with the sliding portion 148a of the first engagement member 148, and the second engagement member 149 is present between the arc face 152b of the push plate 152 at the non-pushed position and the guide portion 141 c of the shutter plate 141.

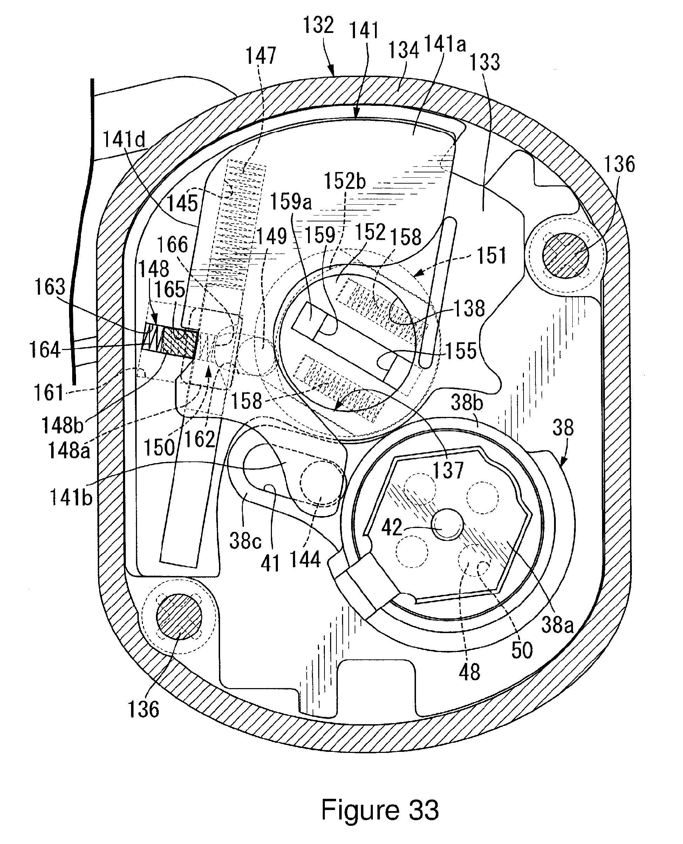

The operating condition of each component during a process in which, in a state in which the inner cylinder 27 of the cylinder lock 20 is at the OFF position and the shutter plate 141 is at the closed position, the magnet lock 35 is unlocked to thus move the shutter plate 141 to the open position, and after the mechanical key 33 is inserted into the key hole 28 and pivoted to the ON position, the mechanical key 33 is returned to the locked position and withdrawn is now explained; when the shutter plate 141 is moved from the closed position to the open position after unlocking the magnet lock 35, as shown in FIG. 33 to FIG. 35, movement of the guide portion 141 c of the shutter plate 141 makes the first engagement member 148 move so that the engagement portion 148b is engaged with the first latching recess 165 by the spring force of the coil spring 164, the second engagement member 149 is present between the arc face 152b of the push plate 152 at the non-pushed position and the guide portion 141 c of the shutter plate 141, and part of the third through hole 65 of the pivot member 151 is blocked by the push plate 152.

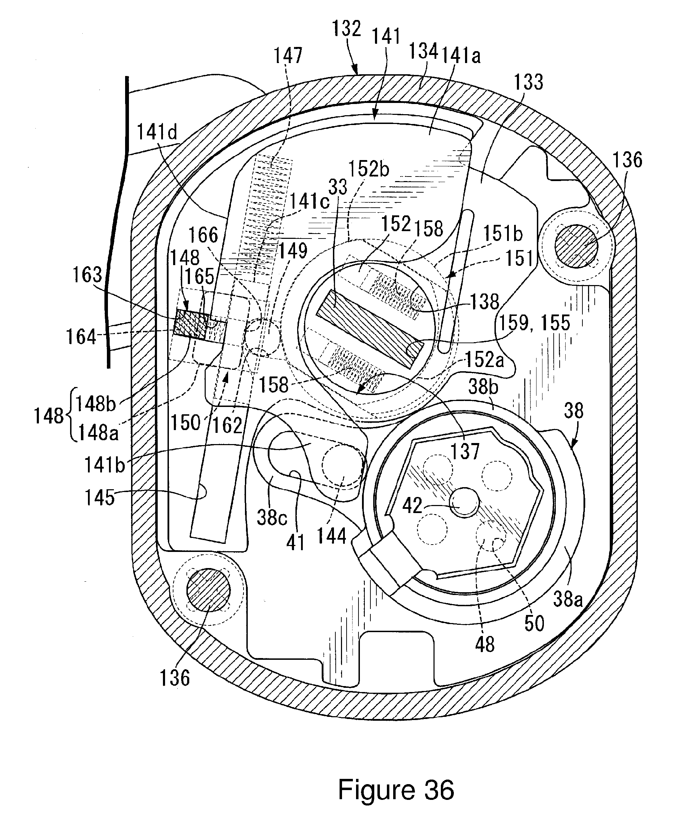

Subsequently, the mechanical key 33 is inserted into the insertion hole 137; when as shown in FIG. 36 to FIG. 38, the mechanical key 33 is inserted into a fourth through hole 159 of the push plate 152, the push plate 152 is moved toward the pushed position side by the mechanical key 33, the second engagement member 149 is moved, by abutment against the other end side in the peripheral direction of the arc face 152b of the push plate 152, to a position at which it engages with the second latching recess 166 of the shutter plate 141, the engagement of the first engagement member 148 with the shutter plate 141 is released, and the engagement portion 148b of the first engagement member 148 abuts against the sliding contact face 141d of the shutter plate 141. In this way, the second engagement member 149 engages in response to insertion of the mechanical key 33, and the shutter plate 141 is thereby retained at the open position.

Furthermore, when the mechanical key 33 is inserted into the fourth through hole 159 of the push plate 152 while the pivot member 151 and the inner cylinder 27 are at the locked position, the second engagement member 149 is moved to a position at which it engages with the second latching recess 166 of the shutter plate 141 by abutment of the one end side in the peripheral direction of the arc face 152b of the push plate 152 moving to the pushed position, and the engagement of the first engagement member 148 with the shutter plate 141 is released. The shutter plate 141 is therefore retained at the open position, when pivoting to the OFF position is carried out by the mechanical key 33, the push plate 152, in response to pivoting of the pivot member 151, pivots while putting the arc face 152b in sliding contact with the second engagement member 149, and at the OFF position the other end in the peripheral direction of the arc face 152b abuts against the second engagement member 149.

Furthermore, when the pivot member 151 and the inner cylinder 27 are pivoted from the OFF position to the ON position by operation of the mechanical key 33 inserted into the key hole 28, the second engagement member 149 abuts against an outside face of one of the two guide wall portions 151 b of the pivot member 151, and engagement of the second engagement member 149 with the second latching recess 166 is maintained.

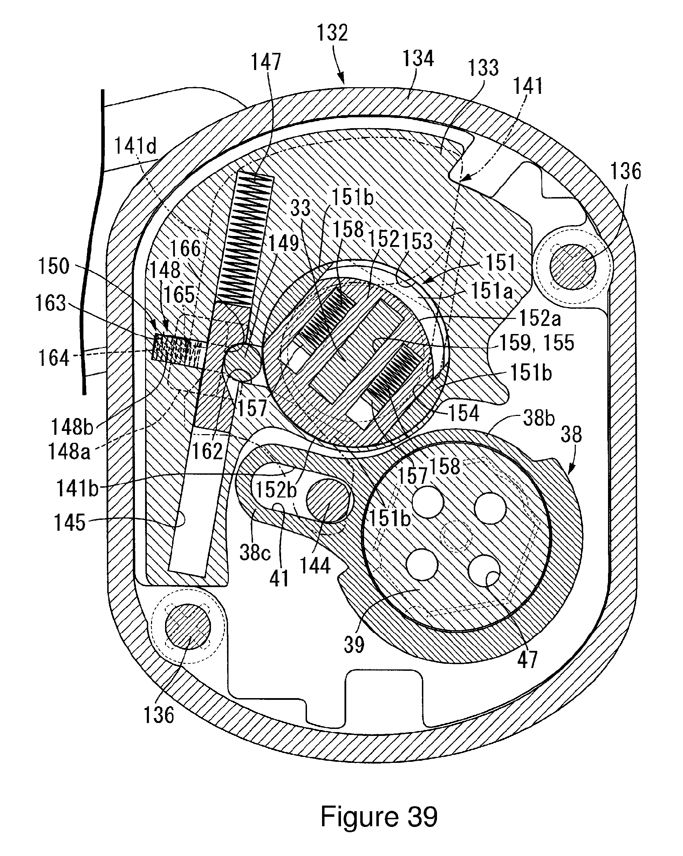

As shown in FIG. 39, when it is returned to the locked position by means of the mechanical key 33 inserted into the key hole 28, the second engagement member 149 abuts against the one end side in the peripheral direction of the arc face 152b of the push plate 152 at the pushed position, and engagement of the second engagement member 149 with the second latching recess 166 is maintained.

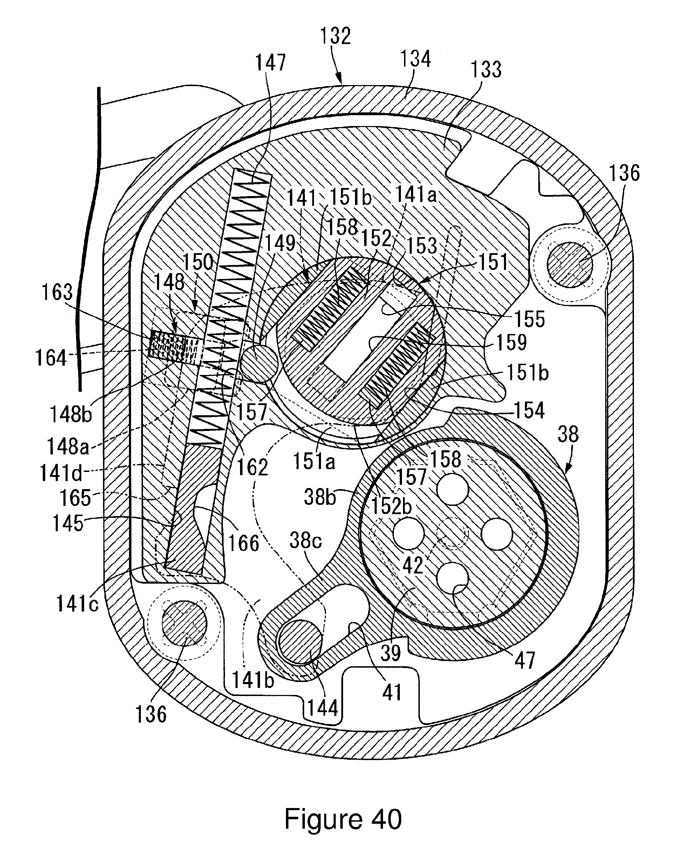

Moreover, as shown in FIG. 40, when the mechanical key 33 is withdrawn from the key hole 28, the push plate 152 is returned to the non-pushed position by the spring force of the coil springs 158, the force acting on the second engagement member 149 toward the side on which it is engaged with the second latching recess 166 is released, and the shutter plate 141 is automatically returned to the closed position by virtue of the spring force of the return spring 147 while separating the second engagement member 149 from the second latching recess 166. During this process, when the second engagement member 149 is engaged with the second latching recess 166, since the engagement portion 148b of the first engagement member 148 is at a position at which it abuts against the sliding contact face 141 d of the shutter plate 141, even if the engagement of the second engagement member 149 with the second latching recess 166 is released, the first engagement member 148 does not engage with the shutter plate 141, and the shutter plate 141 moves smoothly to the closed position.

When the mechanical key 33 is withdrawn at the OFF position, the shutter plate retaining means 150 moves in the same manner as in the above-mentioned situation when the mechanical key 33 is withdrawn at the locked position, and the shutter plate 141 automatically returns to the closed position.

In this way, the shutter plate retaining means 150 retains the shutter plate 141 at the open position by engaging the first engagement member 148 with the shutter plate 141 when the mechanical key 33 is not inserted into the key hole 28 while the shutter plate 141 is at the open position, retains the shutter plate 141 at the open position and releases the engagement of the first engagement member 148 with the shutter plate 141 by engaging the second engagement member 149 with the shutter plate 141 in response to insertion of the mechanical key 33 into the key hole 28 at the locked position or the OFF position, and releases the engagement of the second engagement member 149 with the shutter plate 141 in response to withdrawal of the mechanical key 33 from the key hole 28 at the OFF position or the locked position.

In accordance with the third embodiment, when the magnet lock 35 is unlocked and the shutter plate 141 is moved from the closed position to the open position, the first engagement member 148 engages with the shutter plate 141, and by inserting the mechanical key 33 into the key hole 28 the second engagement member 149 engages with the shutter plate 141 and the engagement of the first engagement member 148 with the shutter plate 141 is released, and as long as the mechanical key 33 is inserted into the key hole 28 the shutter plate 141 is therefore retained at the open position. Furthermore, when the mechanical key 33 is withdrawn from the key hole 28, the engagement of the second engagement member 149 with the shutter plate 141 is released, and the shutter plate 141 therefore automatically returns from the open position to the closed position by virtue of the spring force of the return spring 147. That is, in response to withdrawing the mechanical key 33 inserted into the key hole 28 the shutter plate 141 automatically returns to the closed position, and it is therefore possible to enhance the operability and ensure that closing the shutter plate is not forgotten.

Moreover, since the return spring 147 for urging the shutter plate 141 to the closed position side and the shutter plate retaining means 150 having the first and second engagement members 148 and 149 are housed within the casing 132 so that they move along a plane perpendicular to the axis of the key hole 28, it is possible to form the casing 132 so that it is compact in a direction along the axis of the key hole 28, and the length of the mechanical key 33 can accordingly be made short.

## Claims

1. A cylinder lock protection system comprising: a casing (22) fixed to a cylinder body (21) of a cylinder lock (20) and having an insertion hole (29) corresponding to a key hole (28) provided in an inner cylinder (27) of the cylinder lock (20), a shutter plate (34) housed within the casing (22) so as to be capable of moving along a plane perpendicular to the axis of the key hole (28) between a closed position at which the insertion hole (29) is closed and an open position at which the insertion hole (29) is opened, and a magnet lock (35) that is capable of retaining the shutter plate (34) at the closed position when locked and is capable of operating the shutter plate (34) from the closed position to the open position when unlocked, the shutter plate (34) being automatically returned from the open position to the closed position in response to a mechanical key (33) being withdrawn from the key hole (28), **characterized in that** resilient means (57) provided between the casing (22) and the shutter plate (34) so as to urge the shutter plate (34) toward the closed position side, first and second engagement members (58, 59) capable of engaging with the shutter plate (34) at the open position and retaining the shutter plate (34) at the open position, and cam means (60) for moving the first and second engagement members (58, 59) in response to movement of the shutter plate (34), insertion of the mechanical key (33) into the key hole (28) and removal therefrom, and pivoting of the mechanical key (33) are housed within the casing (22) so as to be capable of moving along a plane perpendicular to the axis of the key hole (28), the cam means (60) making the first engagement member (58) engage with the shutter plate (34) from the closed position side in response to movement of the shutter plate (34) from the closed position to the open position, making the second engagement member (59) engage with the shutter plate (34) from the closed position side in response to insertion of the mechanical key (33) into the key hole (28), releasing the engagement of the first engagement member (58) with the shutter plate (34) in response to pivoting to the ON position by the mechanical key (33) inserted into the key hole (28), and releasing the engagement of the second engagement member (59) with the shutter plate (34) in response to the mechanical key (33) being withdrawn from the key hole (28).

2. A cylinder lock protection system comprising: a casing (90) fixed to a cylinder body (21) of a cylinder lock (20) and having an insertion hole (95) corresponding to a key hole (28) provided in an inner cylinder (27) of the cylinder lock (20), a shutter plate (99) housed within the casing (90) so as to be capable of moving along a plane perpendicular to the axis of the key hole (28) between a closed position at which the insertion hole (95) is closed and an open position at which the insertion hole (95) is opened, and a magnet lock (35) that is capable of retaining the shutter plate (99) at the closed position when locked and is capable of operating the shutter plate (99) from the closed position to the open position when unlocked, the shutter plate (99) being automatically returned from the open position to the closed position in response to a mechanical key (33) being withdrawn from the key hole (28), **characterized in that** resilient means (106) provided between the casing (90) and the shutter plate (99) or a coupling member (105) that moves in association with the shutter plate (99), and urging the shutter plate (99) toward the closed position side, first and second engagement members (108, 109) capable of engaging with the shutter plate (99) or the coupling member (105) when the shutter plate (99) is at the open position and retaining the shutter plate (99) at the open position, and cam means (110) for moving the first and second engagement members (108, 109) in response to movement of the shutter plate (99), insertion of the mechanical key (33) into the key hole (28) and removal therefrom, and pivoting of the mechanical key (33) are housed within the casing (90) so as to be capable of moving along a plane perpendicular to the axis of the key hole (28), the cam means (110) making the first engagement member (108) engage with the shutter plate (99) or the coupling member (105) from the closed position side in response to movement of the shutter plate (99) from the closed position to the open position, making the second engagement member (109) engage with the shutter plate (99) or the coupling member (105) from the closed position side in response to insertion of the mechanical key (33) into the key hole (28), releasing the engagement of the first engagement member (108) with the shutter plate (99) or the coupling member (105) in response to pivoting to the ON position by the mechanical key (33) inserted into the key hole (28), and even if the mechanical key (33) is withdrawn from the key hole (28) at the OFF position, engagement of the second engagement member (109) with the shutter plate (99) or the coupling member (105) being maintained, but engagement of the second engagement member (109) with the shutter plate (99) or the coupling member (105) being released in response to the mechanical key (33) being withdrawn at the locked position from the key hole (28).

3. The cylinder lock protection system according to Claim 2, wherein the coupling member (105), which slides along a plane perpendicular to the axis of the key hole (28) in response to movement of the shutter plate (99), abuts against and engages with the shutter plate (99) from the open position side so that the shutter plate (99) is urged toward the closed position side by the resilient urging force of the resilient means (106) provided between the coupling member (105) and the casing (90), and first and second latching parts (122, 128) for engaging with the first and second engagement members (108, 109) and retaining the shutter plate (99) at the open position are provided on the coupling member (105).

4. A cylinder lock protection system comprising: a casing (132) fixed to a cylinder body (21) of a cylinder lock (20) and having an insertion hole (137) corresponding to a key hole (28) provided in an inner cylinder (27) of the cylinder lock (20), a shutter plate (141) housed within the casing (132) so as to be capable of moving along a plane perpendicular to the axis of the key hole (28) between a closed position at which the insertion hole (137) is closed and an open position at which the insertion hole (137) is opened, and a magnet lock (35) that is capable of retaining the shutter plate (141) at the closed position when locked and is capable of operating the shutter plate (141) from the closed position to the open position when unlocked, the shutter plate (141) being automatically returned from the open position to the closed position in response to a mechanical key (33) being withdrawn from the key hole (28), **characterized in that** resilient means (147) provided between the casing (132) and the shutter plate (141) so as to urge the shutter plate (141) toward the closed position side, and shutter plate retaining means (150) having first and second engagement members (148, 149) capable of engaging with the shutter plate (141) at the open position and retaining the shutter plate (141) at the open position are housed within the casing (132) so as to be capable of moving along a plane perpendicular to the axis of the key hole (28), the shutter plate retaining means (150) being arranged so as to retain the shutter plate (141) at the open position by engaging the first engagement member (148) with the shutter plate (141) when the mechanical key (33) is not inserted into the key hole (28) while the shutter plate (141) is at the open position, retain the shutter plate (141) at the open position and release the engagement of the first engagement member (148) with the shutter plate (141) by engaging the second engagement member (149) with the shutter plate (141) in response to insertion of the mechanical key (33) into the key hole (28), and release the engagement of the second engagement member (149) with the shutter plate (141) in response to withdrawal of the mechanical key (33) from the key hole (28).

## Patentansprüche

1. Zylinderschloss-Schutzsystem mit: einem Gehäuse (22), das an einem Zylinderkörper (21) eines Zylinderschlosses (20) angebracht ist und ein Einführungsloch (29) aufweist, das einem in einem Innenzylinder (27) des Zylinderschlosses (20) bereitgestellten Schlüsselloch (28) entspricht, einer Verschlussplatte (34), die in dem Gehäuse (22) derart untergebracht ist, dass sie in einer Ebene, die senkrecht zur Achse des Schlüssellochs (28) ist, zwischen einer geschlossenen Position, in welcher das Einführungsloch (29) verschlossen ist, und einer geöffneten Position, in welcher das Einführungsloch (29) offen ist, bewegbar ist, und einer Magnetverriegelung (35), die in einem verriegelten Zustand die Verschlussplatte (34) in der geschlossenen Position hält und in einem entriegelten Zustand eine Bewegung der Verschlussplatte (34) aus der geschlossenen Position in die geöffnete Position erlaubt, wobei als Antwort auf ein Herausziehen eines mechanischen Schlüssels (33) aus dem Schlüsselloch (28) die Verschlussplatte (34) aus der geöffneten Position automatisch in die geschlossene Position zurückkehrt, **dadurch gekennzeichnet, dass** zwischen dem Gehäuse (22) und der Verschlussplatte (34) bereitgestellte elastische Mittel (57) zum Zwängen der Verschlussplatte (34) in Richtung der geschlossenen Position, ein erstes und zweites Eingriffselement (58,59) zum Eingreifen mit der Verschlussplatte (34) in der geöffneten Position und zum Halten der Verschlussplatte (34) in der geöffneten Position und Nockeneinrichtungen (60) zum Bewegen des ersten und zweiten Eingriffselements (58,59) als Antwort auf eine Bewegung der Verschlussplatte (34), ein Einführen des mechanischen Schlüssels (33) in das Schlüsselloch (28) und ein Herausziehen daraus und ein Drehen des mechanischen Schlüssels (33) in dem Gehäuse (22) untergebracht sind, um in einer Ebene, die senkrecht zur Achse des Schlüssellochs (28) ist, bewegbar zu sein, wobei die Nockeneinrichtungen (60) konfiguriert sind zum Herbeiführen eines Eingriffs des ersten Eingriffselements (58) mit der Verschlussplatte (34) von der Seite der geschlossenen Position aus als Antwort auf eine Bewegung der Verschlussplatte (34) aus der geschlossenen Position in die geöffnete Position, Herbeiführen eines Eingriffs des zweiten Eingriffselements (59) mit der Verschlussplatte (34) von der Seite der geschlossenen Position aus als Antwort auf ein Einführen des mechanischen Schlüssels (33) in das Schlüsselloch (28), Lösen des Eingriffs des ersten Eingriffselements (58) mit der Verschlussplatte (34) als Antwort auf ein Drehen in die ON-Position durch den in das Schlüsselloch (28) eingeführten mechanischen Schlüssel (33) und Lösen des Eingriffs des zweiten Eingriffselements (59) mit der Verschlussplatte (34) als Antwort auf ein Herausziehen des mechanischen Schlüssels (33) aus dem Schlüsselloch (28).

2. Zylinderschloss-Schutzsystem mit: einem Gehäuse (90), das an einem Zylinderkörper (21) eines Zylinderschlosses (20) angebracht ist und ein Einführungsloch (95) aufweist, das einem in einem Innenzylinder (27) des Zylinderschlosses (20) bereitgestellten Schlüsselloch (28) entspricht, einer Verschlussplatte (99), die in dem Gehäuse (90) derart untergebracht ist, dass sie in einer Ebene, die senkrecht zur Achse des Schlüssellochs (28) ist, zwischen einer geschlossenen Position, in welcher das Einführungsloch (95) verschlossen ist, und einer geöffneten Position, in welcher das Einführungsloch (95) offen ist, bewegbar ist, und einer Magnetverriegelung (35), die in einem verriegelten Zustand die Verschlussplatte (34) in der geschlossenen Position hält und in einem entriegelten Zustand eine Bewegung der Verschlussplatte (99) aus der geschlossenen Position in die geöffnete Position erlaubt, wobei als Antwort auf ein Herausziehen eines mechanischen Schlüssels (33) aus dem Schlüsselloch (28) die Verschlussplatte (99) aus der geöffneten Position automatisch in die geschlossene Position zurückkehrt, **dadurch gekennzeichnet, dass** elastische Mittel (106), die zwischen dem Gehäuse (90) und der Verschlussplatte (99) oder einem sich mit der Verschlussplatte (99) bewegenden Kopplungselement (105) bereitgestellt sind und die Verschlussplatte (34) in Richtung der geschlossenen Position drängen, ein erstes und zweites Eingriffselement (108,109) zum Eingreifen mit der Verschlussplatte (99) oder dem Kopplungselement (105), wenn die Verschlussplatte (99) in der geöffneten Position ist, und zum Halten der Verschlussplatte (99) in der geöffneten Position und Nockeneinrichtungen (110) zum Bewegen des ersten und zweiten Eingriffselements (108,109) als Antwort auf eine Bewegung der Verschlussplatte (99), ein Einführen des mechanischen Schlüssels (33) in das Schlüsselloch (28) und ein Herausziehen daraus und ein Drehen des mechanischen Schlüssels in dem Gehäuse (90) untergebracht sind, um in einer Ebene, die senkrecht zur Achse des Schlüssellochs (28) ist, bewegbar zu sein, wobei die Nockeneinrichtungen (110) konfiguriert sind zum Herbeiführen eines Eingriffs des ersten Eingriffselements (108) mit der Verschlussplatte (99) oder dem Kopplungselement (105) von der Seite der geschlossenen Position aus als Antwort auf eine Bewegung der Verschlussplatte (99) aus der geschlossenen Position in die geöffnete Position, Herbeiführen eines Eingriffs des zweiten Eingriffselements (109) mit der Verschlussplatte (99) oder dem Kopplungselement (105) von der Seite der geschlossenen Position aus als Antwort auf ein Einführen des mechanischen Schlüssels (33) in das Schlüsselloch (28), Lösen des Eingriffs des ersten Eingriffselements (108) mit der Verschlussplatte (99) oder dem Kopplungselement (105) als Antwort auf ein Drehen in die ON-Position durch den in das Schlüsselloch (28) eingeführten mechanischen Schlüssel (33) und Aufrechterhalten des Eingriffs des zweiten Eingriffselements (109) mit der Verschlussplatte (99) oder dem Kopplungselement (105), selbst wenn der mechanische Schlüssel (33) in der OFF-Position aus dem Schlüsselloch (28) herausgezogen wird, aber Lösen des Eingriffs des zweiten Eingriffselements (109) mit der Verschlussplatte (99) oder dem Kopplungselement (105) als Antwort auf ein Herausziehen des mechanischen Schlüssels (33) aus dem Schlüsselloch (28) in der verriegelten Position.

3. Zylinderschloss-Schutzsystem nach Anspruch 2, wobei das Kopplungselement (105), das als Antwort auf eine Bewegung der Verschlussplatte (99) in einer zur Achse des Schlüssellochs (28) senkrechten Ebene gleitet, von der Seite der geöffneten Position aus gegen die Verschlussplatte (99) stößt und mit ihr in Eingriff kommt, so dass die Verschlussplatte (99) durch die elastische Kraft der elastischen Mittel (106), die zwischen dem Kopplungselement (105) und dem Gehäuse (90) bereitgestellt sind, hin in die geschlossene Position gedrückt wird, und wobei an dem Kopplungselement (105) erste und zweite Klinkenteile (122,128) zum Eingriff mit dem ersten und zweiten Eingriffselement (108,109) und zum Halten der Verschlussplatte (99) in der geöffneten Position bereitgestellt sind.

4. Zylinderschloss-Schutzsystem mit: einem Gehäuse (132), das an einem Zylinderkörper (21) eines Zylinderschlosses (20) angebracht ist und ein Einführungsloch (137) aufweist, das einem in einem Innenzylinder (27) des Zylinderschlosses (20) bereitgestellten Schlüsselloch (28) entspricht, einer Verschlussplatte (141), die in dem Gehäuse (132) derart untergebracht ist, dass sie in einer Ebene, die senkrecht zur Achse des Schlüssellochs (28) ist, zwischen einer geschlossenen Position, in welcher das Einführungsloch (137) verschlossen ist, und einer geöffneten Position, in welcher das Einführungsloch (137) offen ist, bewegbar ist, und einer Magnetverriegelung (35), die in einem verriegelten Zustand die Verschlussplatte (141) in der geschlossenen Position hält und in einem entriegelten Zustand eine Bewegung der Verschlussplatte (141) aus der geschlossenen Position in die geöffnete Position erlaubt, wobei als Antwort auf ein Herausziehen eines mechanischen Schlüssels (33) aus dem Schlüsselloch (28) die Verschlussplatte (141) aus der geöffneten Position automatisch in die geschlossene Position zurückkehrt, **dadurch gekennzeichnet, dass** zwischen dem Gehäuse (132) und der Verschlussplatte (141) bereitgestellte elastische Mittel (147) zum Zwängen der Verschlussplatte (141) hin in die geschlossene Position und Verschlussplatte-Halteeinrichtungen (150) mit einem ersten und zweiten Eingriffselement (148,149) zum Eingreifen mit der Verschlussplatte (141) in der geöffneten Position und zum Halten der Verschlussplatte (141) in der geöffneten Position in dem Gehäuse (132) untergebracht sind, um in einer Ebene, die senkrecht zur Achse des Schlüssellochs (28) ist, bewegbar zu sein, wobei die Verschlussplatte-Halteeinrichtungen (150) konfiguriert sind zum Halten der Verschlussplatte (141) in der geöffneten Position durch Eingriff des ersten Eingriffselements (148) mit der Verschlussplatte (141), wenn der mechanische Schlüssel (33) nicht in das Schlüsselloch (28) eingeführt ist, während die Verschlussplatte (141) in der geöffneten Position ist, Halten der Verschlussplatte (141) in der geöffneten Position und Lösen des Eingriffs des ersten Eingriffselements (148) mit der Verschlussplatte (141) durch Eingriff des zweiten Eingriffselements (149) mit der Verschlussplatte (141) als Antwort auf ein Einführen des mechanischen Schlüssels (33) in das Schlüsselloch (28) und Lösen des Eingriffs des zweiten Eingriffselements (149) mit der Verschlussplatte (141) als Antwort auf ein Herausziehen des mechanischen Schlüssels (33) aus dem Schlüsselloch (28).

## Revendications

1. Système de protection de serrure à barillet comprenant : un boîtier (22) fixé à un corps de cylindre (21) d'une serrure à barillet (20) et comportant un orifice d'insertion (29) correspondant à un trou de serrure (28) prévu dans un cylindre intérieur (27) de la serrure à barillet (20), un volet obturateur (34) logé dans le boîtier (22) de façon à pouvoir se déplacer le long d'un plan perpendiculaire à l'axe du trou de serrure (28) entre une position fermée dans laquelle l'orifice d'insertion (29) est fermé et une position ouverte dans laquelle l'orifice d'insertion (29) est ouvert, et une fermeture à aimant (35) capable, à l'état verrouillé, de retenir le volet obturateur (34) dans la position fermée et, à l'état déverrouillé, d'actionner le volet obturateur (34) de la position fermée à la position ouverte, le volet obturateur (34) étant rappelé automatiquement de la position ouverte à la position fermée en réponse au retrait d'une clé mécanique (33) du trou de serrure (28), **caractérisé par** des moyens élastiques (57) prévus entre le boîtier (22) et le volet obturateur (34) de façon à pousser le volet obturateur (34) vers le côté position fermée, des premier et second organes de prise (58, 59) aptes à venir en prise avec le volet obturateur (34) en position ouverte et à retenir le volet obturateur (34) en position ouverte, et des moyens formant came (60) pour déplacer les premier et second organes de prise (58, 59) en réponse au mouvement du volet obturateur (34), à l'insertion de la clé mécanique (33) dans le trou de serrure (28) et à son retrait, et au pivotement de la clé mécanique (33), sont logés dans le boîtier (22) de façon à pouvoir se déplacer le long d'un plan perpendiculaire à l'axe du trou de serrure (28), les moyens formant came (60) amenant le premier organe de prise (58) à venir en prise avec le volet obturateur (34) à partir du côté position fermée en réponse au mouvement du volet obturateur (34) de la position fermée vers la position ouverte, amenant le second organe de prise (59) à venir en prise avec le volet obturateur (34) à partir du côté position fermée en réponse à l'insertion de la clé mécanique (33) dans le trou de serrure (28), libérant la prise du premier organe de prise (58) avec le volet obturateur (34) en réponse au pivotement vers la position « ON » de la clé mécanique (33) insérée dans le trou de serrure (28), et libérant la prise du second organe de prise (59) avec le volet obturateur (34) en réponse au retrait de la clé mécanique (33) du trou de serrure (28).

2. Système de protection de serrure à barillet comprenant : un boîtier (90) fixé à un corps de cylindre (21) d'un barillet de serrure (20) et comportant un orifice d'insertion (95) correspondant à un trou de serrure (28) prévu dans un cylindre intérieur (27) de la serrure à barillet (20), un volet obturateur (99) logé dans le boîtier (90) de façon à pouvoir se déplacer le long d'un plan perpendiculaire à l'axe du trou de serrure (28) entre une position fermée dans laquelle l'orifice d'insertion (95) est fermé et une position ouverte dans laquelle l'orifice d'insertion (95) est ouvert, et une fermeture à aimant (35) capable, à l'état verrouillé, de retenir le volet obturateur (99) dans la position fermée et, à l'état déverrouillé, d'actionner le volet obturateur (99) de la position fermée à la position ouverte, le volet obturateur (99) étant rappelé automatiquement de la position ouverte à la position fermée en réponse au retrait d'une clé mécanique (33) du trou de serrure (28), **caractérisé par** des moyens élastiques (106) prévus entre le boîtier (90) et le volet obturateur (99) ou un organe d'accouplement (105) qui se déplace en association avec le volet obturateur (99), et poussant le volet obturateur (99) vers le côté position fermée, des premier et second organes de prise (108, 109) aptes à venir en prise avec le volet obturateur (99) ou l'organe d'accouplement (105) lorsque le volet obturateur (99) est en position ouverte et de retenir le volet obturateur (99) en position ouverte, et des moyens formant came (110) pour déplacer les premier et second organes de prise (108, 109) en réponse au mouvement du volet obturateur (99), à l'insertion de la clé mécanique (33) dans le trou de serrure (28) et à son retrait, et au pivotement de la clé mécanique (33), sont logés dans le boîtier (90) de façon à pouvoir se déplacer le long d'un plan perpendiculaire à l'axe du trou de serrure (28), les moyens formant came (110) amenant le premier organe de prise (108) à venir en prise avec le volet obturateur (99) ou l'organe d'accouplement (105) à partir du côté position fermée en réponse au mouvement du volet obturateur (99) de la position fermée vers la position ouverte, amenant le second organe de prise (109) à venir en prise avec le volet obturateur (99) ou l'organe d'accouplement (105) à partir du côté position fermée en réponse à l'insertion de la clé mécanique (33) dans le trou de serrure (28), libérant la prise du premier organe de prise (108) avec le volet obturateur (99) ou l'organe d'accouplement (105) en réponse au pivotement vers la position « ON » de la clé mécanique (33) insérée dans le trou de serrure (28), et même si la clé mécanique (33) est retirée du trou de serrure (28) en position OFF, la prise du second organe de prise (109) avec le volet obturateur (99) ou l'organe d'accouplement (105) étant maintenue, mais la prise du second organe de prise (109) avec le volet obturateur (99) ou l'organe d'accouplement (105) étant libérée en réponse au retrait de la clé mécanique (33) du trou de serrure (28) en position verrouillée.

3. Système de protection de serrure à barillet selon la revendication 2, dans lequel l'organe d'accouplement (105), qui coulisse le long d'un plan perpendiculaire à l'axe du trou de serrure (28) en réponse au mouvement du volet obturateur (99), vient en butée contre et en prise avec le volet obturateur (99) à partir du côté position ouverte de sorte que le volet obturateur (99) est poussé vers le côté position fermée par la force de poussée élastique des moyens élastiques (106) prévus entre l'organe d'accouplement (105) et le boîtier (90), et dans lequel des première et seconde parties d'encliquetage (122, 128) pour venir en prise avec les premier et second organes de prise (108, 109) et retenir le volet obturateur (99) en position ouverte sont prévues sur l'organe d'accouplement (105).

4. Système de protection de serrure à barillet comprenant : un boîtier (132) fixé à un corps de cylindre (21) d'un barillet de serrure (20) et comportant un orifice d'insertion (137) correspondant à un trou de serrure (28) prévu dans un cylindre intérieur (27) de la serrure à barillet (20), un volet obturateur (141) logé dans le boîtier (132) de façon à pouvoir se déplacer le long d'un plan perpendiculaire à l'axe du trou de serrure (28) entre une position fermée dans laquelle l'orifice d'insertion (137) est fermé et une position ouverte dans laquelle l'orifice d'insertion (137) est ouvert, et une fermeture à aimant (35) capable, à l'état verrouillé, de retenir le volet obturateur (141) dans la position fermée et, à l'état déverrouillé, d'actionner le volet obturateur (141) de la position fermée à la position ouverte, le volet obturateur (141) étant rappelé automatiquement de la position ouverte à la position fermée en réponse au retrait d'une clé mécanique (33) du trou de serrure (28), **caractérisé par** des moyens élastiques (147) prévus entre le boîtier (132) et le volet obturateur (141) de façon à pousser le volet obturateur (141) vers le côté position fermée, et des moyens de retenue (150) du volet obturateur comportant des premier et second organes de prise (148, 149) aptes à venir en prise avec le volet obturateur (141) en position ouverte et de retenir le volet obturateur (141) en position ouverte sont logés à l'intérieur du boîtier (132) de façon à pouvoir se déplacer le long d'un plan perpendiculaire à l'axe du trou de serrure (28), les moyens de retenue (150) du volet obturateur étant agencés de façon à retenir le volet obturateur (141) en position ouverte en mettant en prise le premier organe de prise (148) avec le volet obturateur (141) lorsque la clé mécanique (33) n'est pas insérée dans le trou de serrure (28) alors que le volet obturateur (141) est en position ouverte, à retenir le volet obturateur (141) en position ouverte et libérer la prise du premier organe de prise (148) avec le volet obturateur (141) en mettant en prise le second organe de prise (149) avec le volet obturateur (141) en réponse à l'insertion de la clé mécanique (33) dans le trou de serrure (28), et à libérer la prise du second organe de prise (149) avec le volet obturateur (141) en réponse au retrait de la clé mécanique (33) du trou de serrure (28).
